(19) Europäisches Patentamt / European Patent Office / Office européen des brevets

(11) **EP 2 082 263 B1**

(12) **FASCICULE DE BREVET EUROPEEN**

(45) Date de publication et mention
de la délivrance du brevet:
**06.04.2016 Bulletin 2016/14**

(21) Numéro de dépôt: **06830978.0**

(22) Date de dépôt: **20.10.2006**

(51) Int Cl.:
*G01T 1/24* *(2006.01)*     *G01T 1/29* *(2006.01)*

(86) Numéro de dépôt international:
**PCT/FR2006/002360**

(87) Numéro de publication internationale:
**WO 2008/046971 (24.04.2008 Gazette 2008/17)**

(54) **GAMMA-CAMERA UTILISANT LA PROFONDEUR D'INTERACTION DANS UN DETECTEUR**

GAMMA-KAMERA, DIE DIE WECHSELWIRKUNGSTIEFE IN EINEM DETEKTOR BENUTZT

GAMMA-CAMERA USING THE DEPTH OF INTERACTION IN A DETECTOR

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**29.07.2009 Bulletin 2009/31**

(73) Titulaire: **Commissariat à l'Énergie Atomique et aux Énergies Alternatives
75015 Paris (FR)**

(72) Inventeurs:
• **GUERIN, Lucie
14000 Caen (FR)**
• **REBUFFEL, Véronique
38700 Corenc (FR)**
• **VERGER, Loïck
38000 Grenoble (FR)**

(74) Mandataire: **Ilgart, Jean-Christophe
BREVALEX
95, rue d'Amsterdam
75378 Paris Cedex 8 (FR)**

(56) Documents cités:
EP-A- 1 548 465     EP-A1- 0 763 751
US-A- 5 813 983     US-A1- 2004 026 624
US-B1- 6 194 728     US-B1- 6 333 504
US-B1- 6 448 559     US-B1- 6 455 856

• BRUYANT P P: "Analytic and iterative reconstruction algorithms in SPECT" Journal of Nuclear Medicine Soc. Nucl. Med USA, vol. 43, no. 10, pages 1343-1358, XP002440964 ISSN: 0161-5505 Extrait de l'Internet: URL:http://jnm.snmjournals.org/cgi/reprint /43/10/1343> cité dans la demande
• VANDENBERGHE S ET AL: "Iterative reconstruction algorithms in nuclear medicine" Computerized Medical Imaging and Graphics Elsevier UK, vol. 25, no. 2, pages 105-111, XP002440965 ISSN: 0895-6111 Extrait de l'Internet: URL:http://escher.elis.ugent.be/publ/Edocs /DOC/P101_010.pdf> cité dans la demande
• SCHEIBER C ED - CERVELLI FRANCO CHIARELLI GIORGIO FORTI FRANCESCO GRASSI MARCO SCRIBANO ANGELO: "CdTe and CdZnTe detectors in nuclear medicine", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 448, no. 3, 1 July 2000 (2000-07-01), pages 513-524, XP004206587, ISSN: 0168-9002, DOI: 10.1016/S0168-9002(00)00282-5

## EP 2 082 263 B1

**Description**

## DOMAINE TECHNIQUE ET ART ANTÉRIEUR

L'invention concerne le domaine des gamma-caméras, utilisées en médecine nucléaire.

Un exemple de détecteur utilisé dans ce genre de caméra est un scintillateur NaI(Tl).

Actuellement, les services de médecine nucléaire utilisent essentiellement des caméras de type Anger, dites classiques, où le détecteur des rayonnements gamma est constitué d'un tel scintillateur NaI(Tl). Un collimateur est placé devant ce scintillateur afin de sélectionner les photons arrivant sur le détecteur. Le collimateur le plus répandu est le collimateur orthogonal à trous parallèles hexagonaux (nid d'abeille), imposant un compromis entre la résolution spatiale et l'efficacité du système.

Une gamma caméra de l'art antérieur est décrite dans le document US 6448559 : chaque pixel du détecteur est décomposé en trois couches. La profondeur d'interaction peut être détectée. Les différentes couches permettent, éventuellement en combinaison, de réaliser des images du type PET ou SPECT ou CT.

Les images ainsi obtenues par cette caméra classique offrent de pauvres performances (compromis entre la résolution spatiale de 100 mm pour une source de 140 keV à 10 cm du collimateur ; et l'efficacité de $10^{-4}$ pour une source de 140 keV à 10 cm du collimateur ; avec en plus un mauvais contraste de l'image).

L'émergence des détecteurs à base de semi-conducteur, tel que le CdTe, le CdZnTe (CZT) ou encore le silicium, permet d'envisager une nouvelle génération de gamma-caméra.

On peut ainsi combiner le détecteur CZT à un collimateur à trous carrés, avec un trou du collimateur correspondant à un pixel du détecteur.

Ce système permet d'atteindre le même compromis entre la résolution spatiale Rs et l'efficacité que pour les caméras classiques.

De plus cette caméra permet d'améliorer le contraste de l'image par une résolution en énergie du détecteur CZT de 4.6 % à 140 keV, contre 10 % pour le scintillateur NaI(Tl).

Désormais se pose le problème d'améliorer les performances de ces dispositifs, tant en ce qui concerne le flux de photons captés, c'est à dire l'efficacité (limité du fait de la présence du collimateur), que de la résolution spatiale que l'on peut atteindre.

On cherche à améliorer le compromis résolution spatiale-efficacité de ces systèmes ou à améliorer leur efficacité tout en améliorant ou en maintenant la résolution spatiale actuelle, ou à améliorer leur résolution spatiale tout en améliorant ou en maintenant l'efficacité actuelle.

Selon un autre aspect, on peut obtenir, à l'aide d'une gamma-caméra, deux types d'images : des images de type planaire, correspondant à une acquisition sous un seul angle de vue, et des images de type tomographique, correspondant à plusieurs acquisitions obtenues sous plusieurs angles de vue.

Avec les gamma-caméras classiques, les images tomographiques sont obtenues grâce à des méthodes de reconstruction, contrairement aux images planaires, qui n'en nécessitent pas.

Les méthodes de reconstruction utilisées pour les acquisitions tomographiques sont classiquement des méthodes analytiques ou itératives.

## EXPOSÉ DE L'INVENTION

Selon l'invention, on prend en compte, dans la méthode de reconstruction mise en oeuvre, la profondeur d'interaction des photons dans le détecteur par rapport à la face d'entrée de celui-ci. Cette profondeur d'interaction est ci-après appelée DOI en référence à l'acronyme anglais de « Depth of Interaction).

On combine donc une détermination de la profondeur d'interaction avec une méthode de reconstruction, ce qui résulte en une amélioration de la résolution spatiale et/ou de l'efficacité des gamma-caméras.

L'invention concerne d'abord un procédé de reconstruction d'une image d'une source de photons à partir d'interactions de photons émis par cette source avec un détecteur d'une gamma-caméra tel que décrit dans la revendication 1.

L'invention permet d'améliorer le compromis entre la résolution spatiale et l'efficacité du système.

Selon l'invention on décompose le détecteur en plusieurs pixels, et chaque pixel en plusieurs voxels superposés. Lors de la reconstruction, on détermine alors, pour chaque photon reçu, le voxel du détecteur dans lequel le photon a interagi, puis on comptabilise pour chaque voxel du détecteur, le nombre de photons ayant interagi dans ce voxel et enfin on définit, pour chaque voxel du détecteur, une donnée statistique brute ou différentielle, une donnée brute correspondant au nombre de photons. comptabilisés pour le voxel considéré, une donnée différentielle correspondant à une différence entre des nombres de photons comptabilisés pour différents voxels. On met alors en oeuvre un algorithme de reconstruction utilisant les données statistiques préalablement recueillies.

La reconstruction peut être réalisée selon une méthode itérative algébrique, par exemple selon une méthode de type ART ou SART.

Elle peut être réalisée selon une méthode itérative statistique, par exemple selon une méthode de type MLEM ou OSEM ou MAP ou une méthode de régularisation.

La présente invention permet de reconstruire des images de type planaire ou tomographique.

Selon un mode de réalisation, les zones d'interaction dans le détecteur sont réparties, de manière fictive, en n couches d'interaction d'épaisseurs identiques ou différentes, une profondeur d'interaction étant associée à chaque couche. A chaque interaction est associée une des couches du détecteur et la profondeur correspondante. On peut utiliser un détecteur monolithique ou un détecteur constitué de n couches détectrices empilées, chaque couche définissant une profondeur d'interaction.

Pour accroître encore plus les performances du traitement, le volume d'interaction de chaque portion du détecteur, située dans le prolongement de chaque trou du collimateur, peut être séparé en au moins deux pixels. On augmente ainsi la résolution, donc la précision du système.

L'invention concerne également un dispositif de reconstruction d'image d'une source de photons à partir d'interactions de photons, émis par cette source, avec un détecteur d'une gamma-caméra tel que décrit dans la revendication 8.

L'invention concerne également un dispositif d'imagerie comportant un détecteur de rayonnement, un collimateur disposé devant le détecteur, et un dispositif de reconstruction d'images tel que décrit ci-dessus.

Le fait de déterminer pour chaque interaction dans le détecteur une profondeur d'interaction (DOI) permet d'accroître le nombre d'informations disponibles pour chaque interaction, en particulier celles relatives au trajet du ou des photons ayant donné lieu à l'interaction.

La présente invention permet d'accroître l'ouverture angulaire en réduisant la hauteur des septas du collimateur, et/ou en accroissant la taille des trous du collimateur. On augmente ainsi l'efficacité du système tout en maintenant ou en améliorant la précision de la localisation (Rs). L'accroissement de l'ouverture angulaire des trous permet de capter plus de photons dans chaque trou.

L'information de localisation de l'interaction de chaque photon dans le détecteur est utilisée lors de la reconstruction (résolution du problème inverse) afin de remonter à la distribution des sources dans l'objet.

L'information de localisation dans la profondeur du détecteur contribue nettement à l'augmentation, des caractéristiques de précision du système.

Pour la partie reconstruction, on peut partir de chacun des signaux électriques relevés aux bornes du détecteur ou bien de données statistiques brutes ou différentielles telles que précisées ci-dessus.

L'invention permet, par l'utilisation, dans les techniques de reconstruction, de l'information relative à la profondeur d'interaction, d'améliorer la résolution spatiale par rapport aux dispositifs connus de type caméra d'Anger.

Selon l'invention une reconstruction est effectuée tant sur les images acquises en mode planaire que sur les images acquises en mode tomographique.

## BRÈVE DESCRIPTION DES DESSINS

- Les figures 1A et 1B représentent un détecteur et son collimateur, ainsi que les diverses profondeurs et les divers cônes d'ouverture de détection associés à ces profondeurs, dans le cadre d'un procédé selon l'invention.
- Les figures 2A et 2B représentent un détecteur et diverses profondeurs de pénétration dans ce détecteur, ainsi que l'évolution, avec la profondeur, du temps de montée des signaux électriques.
- La figure 3 représente un détecteur et des sous-couches de taille croissante avec la profondeur dans ce détecteur.
- Les figures 4A et 4B représentent plusieurs pixels détecteurs, avec une pluralité de trous dans le collimateur, ainsi que, pour chaque pixel détecteur, les diverses profondeurs et les divers cônes de détection associés à ces profondeurs, dans le cadre d'un procédé selon l'invention.
- Les figures 5A et 5B illustrent l'éclairement par une source ponctuelle sur le détecteur mono ou multicouches.
- La figure 6 illustre une application possible de l'invention en mode tomographique.
- La figure 7 illustre un autre mode de réalisation de l'invention, dans lequel on pixellise un détecteur dans les trous du collimateur.
- La figure 8 représente divers blocs de données réalisables, conformément à l'invention, dans un détecteur.
- Les figures 9A et 9B illustrent des voxels d'un objet, et un schéma itératif de traitement des données statistiques recueillies.
- La figure 10 est un schéma illustrant la définition de 4 zones d'éclairement.
- Les figures 11A-11D et 12A-12D représentent des images reconstruites par diverses méthodes, en mode planaire, d'une part avec un détecteur à une couche (figures 11A-11D) et d'autre part à plusieurs couches (figures 12A-12D).
- Les figures 13A-13D et 14A-14D représentent des images reconstruites par diverses méthodes, en mode tomographique, d'une part avec un détecteur à une couche (figures 13A-13D) et d'autre part à plusieurs couches (figures 14A-14D).

- Les figures 15A-15E, 16A-16E, 17A-17E, et 18A-18E représentent le nombre d'interactions dans le détecteur et le profil du détecteur, ainsi que l'image reconstruite et le profil de l'image reconstruite, d'une part avec un détecteur à une couche (figures 15A-15E et figures 17A-17E) et d'autre part à plusieurs couches (figures 16A-16E et figures 18A-18E), et avec, dans chaque cas, deux sources ponctuelles, séparées de 9,5 mm pour les figures 15A-15E, 16A-16E et de 3,5 mm pour les figures 17A-17E, et 18A-18E.

- Les figures 19A-19D, 20A-20D, 21A-21D, 22A-22D, 23A-23D et 24A-24D représentent le nombre d'interactions dans le détecteur et le profil du détecteur ainsi que l'image reconstruite et le profil de l'image reconstruite, d'une part avec un détecteur à une couche (figures 19A-19D, 21A-21D, 23A-23D) et d'autre part à plusieurs couches (figures 20A-20D, 22A-22D, 24A-24D), et avec, dans chaque cas, une seule source ponctuelle, et un collimateur avec 3 diamètres de trou différents.

- Les figures 25 et 26 représentent l'évolution, en fonction de la dimension des trous du collimateur, de l'efficacité relative d'un détecteur et de la résolution spatiale d'un objet.

- La figure 27 représente l'effet de la pénétration d'un rayonnement avec un angle oblique dans un détecteur.

## EXPOSÉ DÉTAILLÉ DE MODES DE RÉALISATION PARTICULIERS

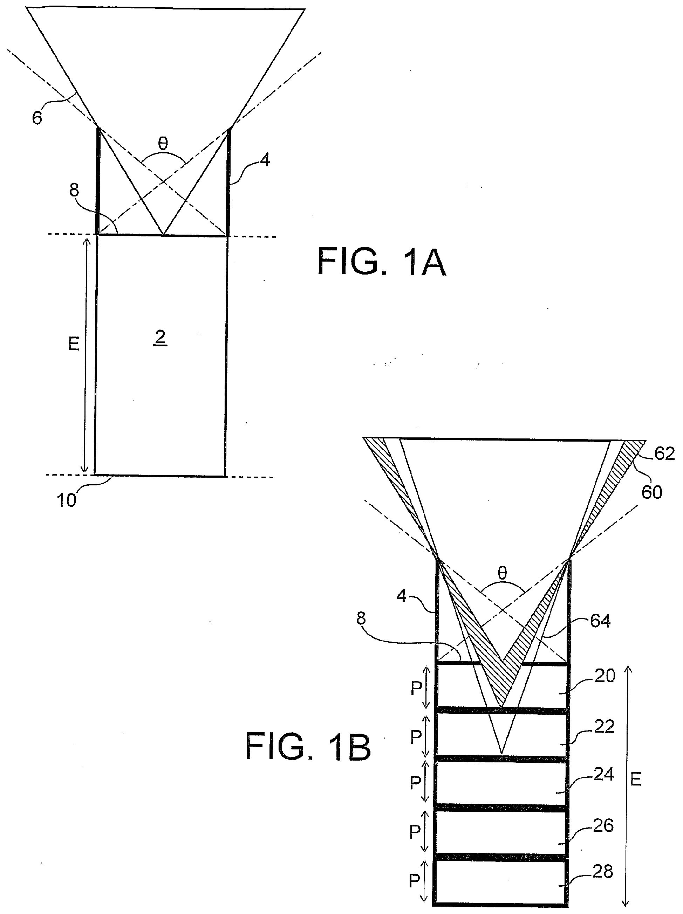

La figure 1A représente un détecteur 2 destiné à être par exemple utilisé en tant que gamma-caméra, en mode planaire ou tomographique. Ce détecteur est par exemple de type CZT, de profondeur ou d'épaisseur E (E = 5 mm dans l'exemple considéré). Le détecteur est associé à un collimateur 4, par exemple à trous parallèles carrés. En figure 1A, seuls un trou du collimateur et un pixel détecteur sont visibles. Les traits interrompus dans le prolongement des faces supérieure 8 et inférieure 10 symbolisent les autres pixels détecteurs et les autres trous du collimateur non représentés. A chacune de ces faces supérieure et inférieure 8, 10 sont également associées au moins une cathode et au moins une anode

Un cône d'ouverture 6 de détection représente de manière très schématique l'ouverture du collimateur pour un point donné de la face d'entrée du détecteur. L'ouverture plus réaliste du collimateur est identifiée par les traits pointillés sur la figure 1A, avec une ouverture maximale représentée par l'angle $\theta$.

Selon l'invention, en fonction des dimensions géométriques du détecteur 2 utilisé, et suivant une direction parallèle à l'axe du collimateur 4, et compte tenu de la précision p que l'on peut atteindre pour la localisation en profondeur (ou DOI) d'un photon dans le détecteur, on peut artificiellement distinguer dans le détecteur des tranches dont chacune est d'épaisseur égale au minimum à la précision p.

Sur la figure 1B ce même pixel détecteur est, conformément à l'invention, divisé, en profondeur à partir de la face d'entrée 8 en n tranches d'épaisseur p égale à la précision qu'il est possible d'atteindre pour la localisation d'un photon dans le détecteur (n = E/p).

Selon un exemple la mesure de la profondeur d'interaction (DOI) peut être de l'ordre de 1 mm pour un détecteur présentant une épaisseur H de 5 mm). On peut donc « découper » le détecteur de la figure 1A en 5 sous-couches 20, 22, 24, 26, 28 d'épaisseur 1 mm chacune (figure 1B). A titre indicatif, un tel détecteur peut avoir une surface de détection de $10*10mm^2$ avec 4*4 pixels de dimension $2*2mm^2$, avec un écartement de 2,5mm entre les pixels.

A chaque sous-couche est associé un cône de détection. Sur la figure 1B seuls 3 de ces cônes 60, 62, 64, respectivement associés aux sous-couches 20, 22, 24, sont représentés. Ces cônes représentent de manière très schématique l'ouverture du collimateur pour un point donné de chaque tranche. Pour les calculs présentés plus loin, on utilise l'ouverture maximale, identifiée par l'angle $\theta$ illustré sur la figure 1B.

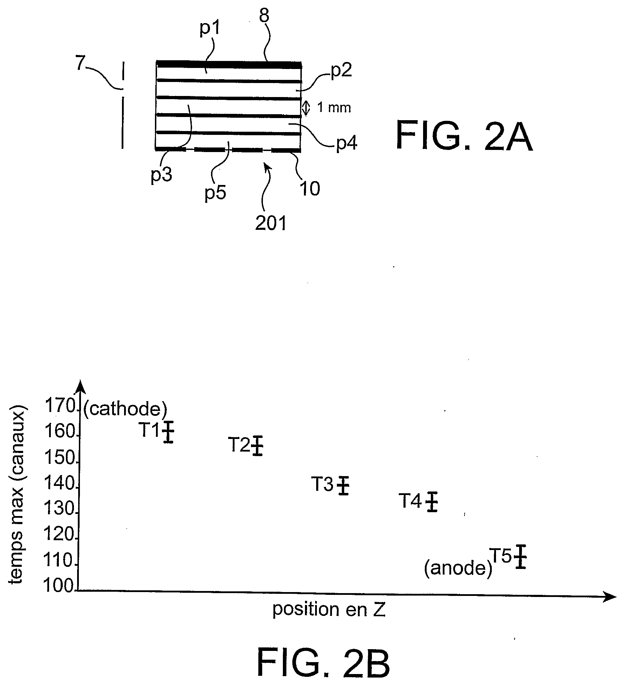

Afin de déterminer expérimentalement les sous-couches, on peut par exemple irradier par la tranche un détecteur, tel que le détecteur 201 de la figure 2A, avec une source ponctuelle et avec un collimateur 7 (un trou de diamètre par exemple 0.6 mm) que l'on place à 5 positions différentes P1, P2, P3, P4, P5, espacées d'1 mm, entre une cathode 8 et une anode 10 du détecteur.

La figure 2B représente les temps de montée des signaux électriques mesurés en fonction de la position latérale du collimateur, et donc du point d'interaction dans le détecteur.

La discrimination en temps de la DOI correspond donc sensiblement à la discrimination spatiale des interactions des photons dans le détecteur. On peut donc, lors du traitement des données, discrétiser le détecteur en sous-couches, chaque sous-couche ayant la dimension de la précision obtenue sur la mesure de la DOI.

Un premier moyen de récupérer la profondeur d'interaction (DOI) dans un détecteur consiste à prévoir, pour chaque pixel, un empilement de n couches conductrices reliées chacune à un jeu « dédié » d'anode et de cathode. L'information de profondeur est alors immédiatement disponible et il n'est pas nécessaire de prévoir des moyens spécifiques de détermination de la DOI.

Dans le cas où on utilise un détecteur « monolithique », chaque pixel est relié à un jeu d'anode et de cathode. Chaque pixel est alors décomposé fictivement en plusieurs sous-couches et les signaux électriques issus d'interactions dans différents voxels de ce pixel sont tous « collectés » sur une même anode. On prévoit alors des moyens de détermination de la DOI à partir du signal reçu sur l'anode de chaque pixel.

Un exemple de procédé pour obtenir la DOI dans un détecteur est l'utilisation de la technique des spectres bi paramétrique telle que par exemple décrite dans EP-763 751 où on utilise par exemple un signal d'anode. Des exemples de spectres biparamétriques sont également donnés dans le document de E. Gros d'Aillon et al., IEEE Trans. On Nucl.Science, 52, 6, 3096-3102, 2005.

Comme expliqué dans le document EP-763 751, un spectre biparamétrique relie un ensemble de temps de montée et un ensemble d'amplitudes de signaux électriques mesurés, à charge ou énergie constante. Pour chaque interaction, on peut mesurer sur le signal électrique correspondant, une amplitude et un temps de montée. Par ailleurs, plus l'interaction photonique est proche du collimateur, plus le temps de montée est grand et l'amplitude grande. Ainsi, connaissant l'amplitude ou le temps de montée d'un signal électrique donné, on peut en déduire la profondeur d'interaction du photon à l'origine de ce signal.

Là encore un compromis est réalisé entre la taille du pixel (résolution spatiale intrinsèque du détecteur) et la précision de mesure de la DOI.

Dans l'exemple donné ci-dessus, on discrétise l'épaisseur du détecteur (de 5 mm) en 5 sous-couches d'1 mm.

La figure 1B illustre schématiquement ce que permet de réaliser la détermination de la DOI, avec le pixel 2 du détecteur placé derrière un collimateur 4. Par une technique telle que celle décrite ci-dessus, on détermine la précision avec laquelle peut être estimée la profondeur d'interaction d'un photon dans ce détecteur. Il en résulte que chaque profondeur d'interaction peut être associée à un cône d'ouverture, la face d'entrée 8 du détecteur voyant le cône 60, différent du cône 62 vu par la sous-couche 22 et du cône 64 vu par la sous-couche 24, et encore différent des cônes (non représentés), vus par les sous-couches 26, 28.

L'invention permet l'utilisation d'un collimateur à parois moins hautes que ceux utilisés usuellement dans des gamma-caméras, par exemple de hauteur inférieure à 30 mm ou 25 mm, ou comprise entre 5 mm et 30 mm et/ou à trous plus grands que ceux utilisés usuellement, par exemple de diamètre compris entre 1 mm et 10 mm.

Les exemples donnés ci-dessus mettent en oeuvre une discrétisation à pas constant du détecteur (épaisseurs $p = 1$ mm sur la figure 1B) mais on peut également réaliser des tranches d'épaisseur non constante, par exemple d'épaisseur croissante en fonction de la profondeur d'interaction. On peut ainsi prendre en compte la diminution du nombre de photons avec la profondeur, donc compenser l'augmentation du bruit avec la profondeur.

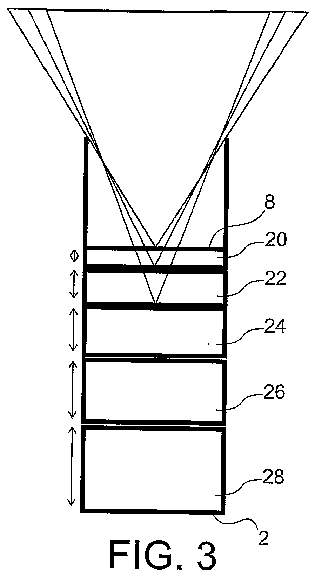

Ainsi, sur la figure 3 est représenté un détecteur 2 avec des tranches 20, 22, 24, 26, 28 d'épaisseurs croissantes, la profondeur augmentant à partir de la face d'entrée 8 des photons dans le détecteur.

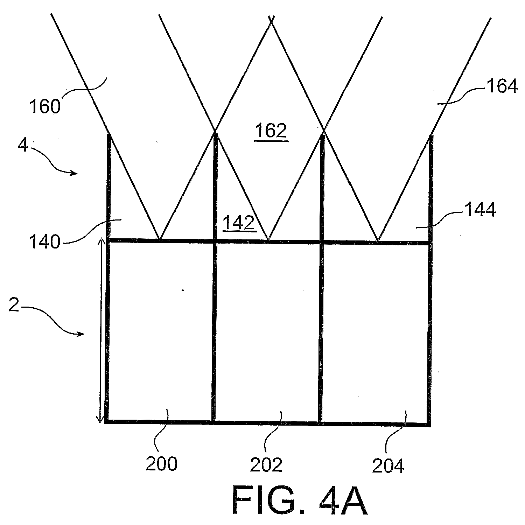

Comme le montre la figure 4A un détecteur de gamma-caméra est usuellement constitué d'une pluralité de pixels 200, 202, 204, et est associé à un collimateur (à trous carrés parallèles) constitué d'une multitude de trous 140, 142, 144 juxtaposés. A chaque pixel est associé un cône de détection 160, 162, 164. Encore une fois, il s'agit là d'une simplification comme expliqué ci-dessus en liaison avec la figure 1B.

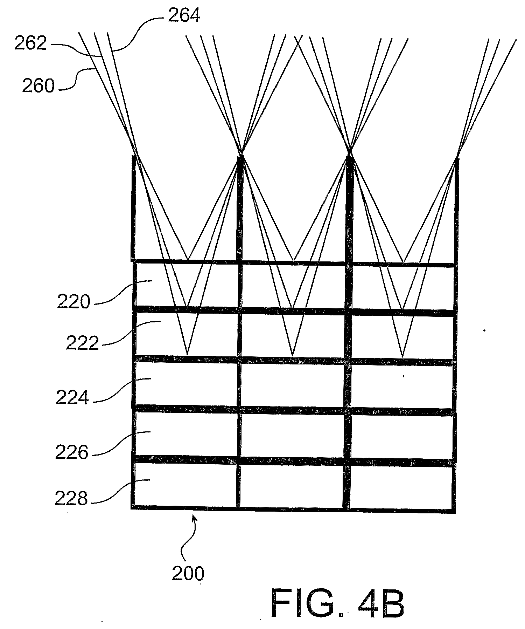

Conformément à l'invention, chaque pixel du détecteur se voit associer un ensemble de tranches dans le corps de celui-ci. Ainsi sur la figure 4B, on a représenté, pour chaque pixel, les 5 tranches correspondant aux zones d'épaisseur égale à la précision. Pour le pixel 200, les 5 tranches sont désignées par les références 220, 222, 224, 226, 228. A chaque tranche de chaque pixel est associé un cône de détection, il existe donc 15 cônes au total sur la figure 4B, mais seuls les cônes des trois premières tranches sont représentés pour des raisons de lisibilité, les 3 premiers cônes des 3 premières tranches du pixel 200 étant désignés par les références 260, 262, 264.

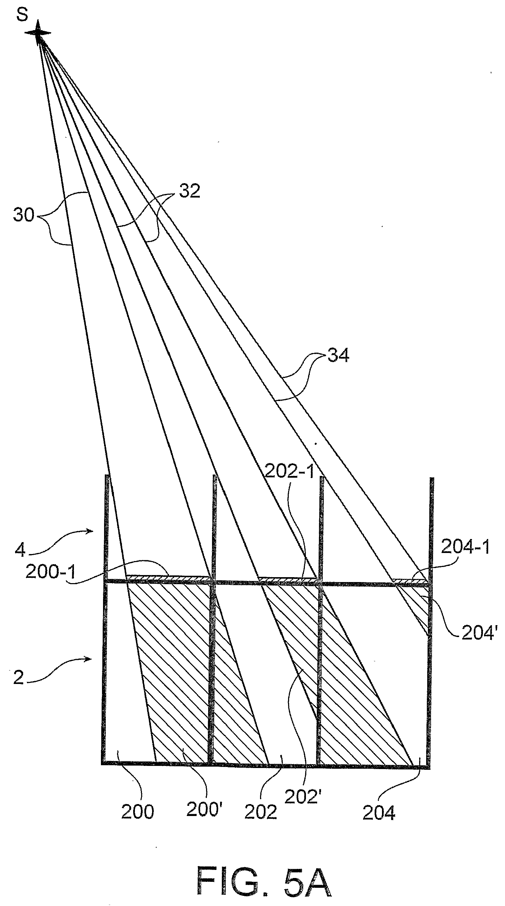

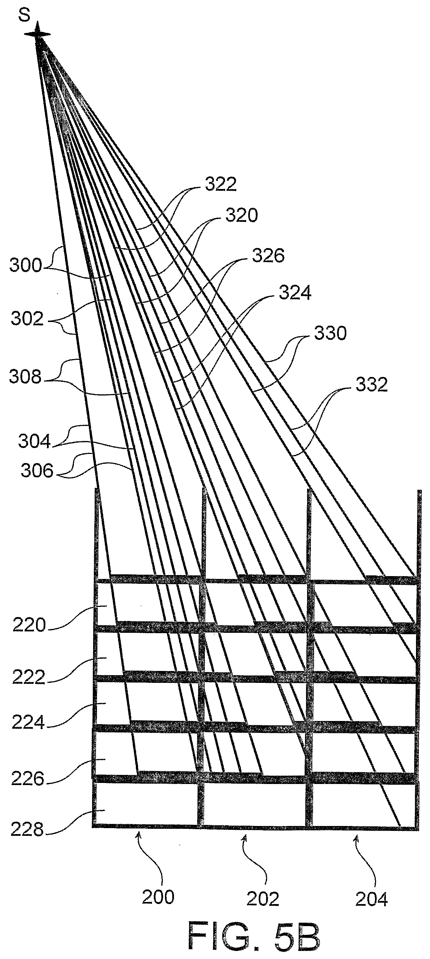

Les figures 5A et 5B permettent de représenter schématiquement, pour une source ponctuelle de rayonnement S, l'apport d'une mesure de DOI : la figure 5A est un cas de mesure classique, sans estimation de DOI, tandis que la figure 5B permet de représenter les informations supplémentaires que l'on peut obtenir sur la localisation spatiale d'une source S lors de la mise en oeuvre de l'invention.

Dans un cas (figure 5A), à chaque pixel 200, 202, 204 est associé un ensemble global d'interactions résultant de l'éclairement 30, 32, 34 de la source de photons sur les pixels détecteurs, représentés schématiquement sur la figure. Par l'effet du collimateur 4, une partie seulement, identifiée par la référence 200-1, 202-1, 204-1 de la surface d'entrée de chaque pixel, repérée par une surépaisseur du trait sur la figure, est traversée par des photons provenant de la source. Au pixel 200 (respectivement 202) est associé l'ensemble des interactions résultant de l'éclairement 30 (respectivement 32). Chaque zone d'interaction 200', 202', 204' dans chaque pixel est représentée par des hachures.

Dans l'autre cas (figure 5B), on obtient beaucoup plus d'informations qui vont être utilisées avec profit lors de l'étape de reconstruction en mode planaire ou tomographique. Ces informations proviennent de l'ensemble des éclairements 300-308, 320-324 et 330-332 Les zones de pénétration des surfaces d'entrée de chaque zone correspondant à une profondeur donnée dans chaque pixel sont, là aussi, représentées en surépaisseur. On comprend qu'une meilleure résolution spatiale pourra être atteinte avec un traitement prenant en compte les DOI. On obtient donc, en ce qui concerne la source S de la figure 5B, des informations supplémentaires sur sa localisation spatiale. On peut également réaliser, pour tous les pixels de la figure 5B, une partition du détecteur en sous-couches d'épaisseur non constante, comme sur la figure 3 pour un seul pixel, permettant ainsi une meilleure prise en compte de l'augmentation du bruit avec la profondeur.

Si on reprend l'exemple du détecteur de 5 mm d'épaisseur, on aura, pour chaque pixel, cinq informations, le détecteur étant, lors du traitement des données, divisé -au sens déjà expliqué ci-dessus-en cinq couches, de 1 mm d'épaisseur chacune.

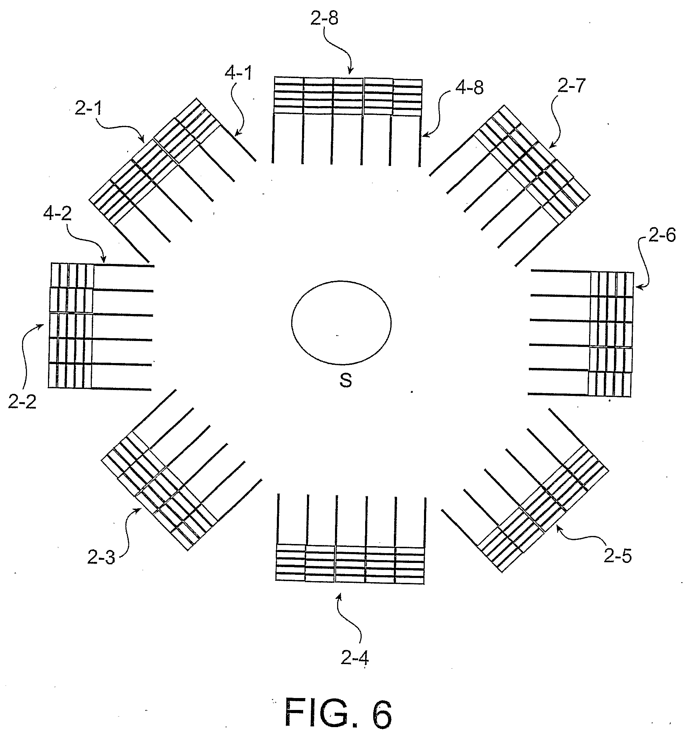

La figure 6 illustre l'implémentation de la mesure de la DOI dans les méthodes de reconstruction en mode tomographique. Ce dernier est un mode où l'on réalise des acquisitions sous différents angles de vue. Un objet S, source de rayonnement, est placé au centre d'un ensemble de détecteurs 2-1, 2-2, ....2-8 (2-i, i = 1-8). Chaque détecteur est associé à un collimateur 4-1, 4-2,....4-i, (i = 1-8). L'ensemble des détecteurs peut être disposé en couronne autour de l'objet S. Ou bien on peut utiliser un unique ensemble détecteur/collimateur que l'on fait tourner en rotation autour de l'objet. On peut aussi utiliser, deux, ou plusieurs, ensembles détecteur/collimateur, immobiles ou que l'on fait tourner en rotation autour de l'objet. Toutes ces configurations permettent de réaliser au moins deux acquisitions à des angles de vue différents.

Pour chaque détecteur 2-i est réalisé une partition en sous-couches comme expliqué ci-dessus en liaison avec les figures précédentes, ces sous-couches pouvant être d'épaisseurs identiques, ou croissantes en fonction de la profondeur comme illustré sur la figure 3 pour un pixel. Ces sous-couches permettront de prendre en compte la profondeur de chaque interaction ou groupe d'interactions dans chaque détecteur, et de réaliser une reconstruction avec les avantages déjà exposés ci-dessus (et notamment une meilleure précision).

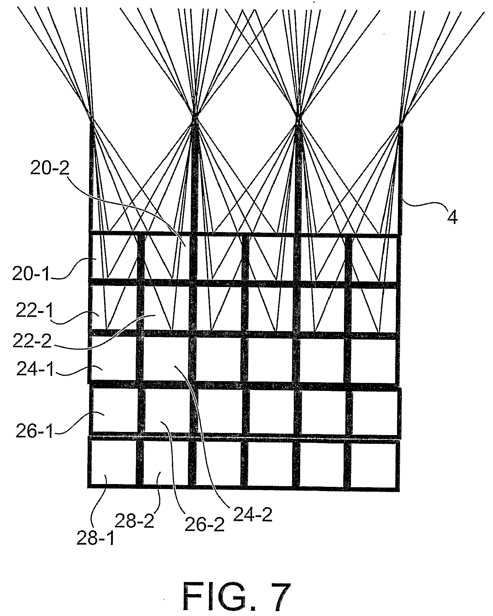

La figure 7 illustre l'implémentation de la mesure de la DOI dans les méthodes de reconstruction, sur un collimateur 4 à trous parallèles carrés, à deux (ou plus de deux) pixels détecteurs physiques, en mode planaire ou tomographique.

Pour améliorer encore plus la précision quant à la localisation spatiale des sources, on peut en effet « souspixelliser » chaque pixel dans chaque trou du collimateur. Sur la figure 7 sont identifiées des cellules, ou voxels, 20-1, 20-2, 22-1, 22-2, 24-1, 24-2, 26-1, 26-2, 28-1, 28-2, du premier pixel détecteur. A chaque voxel est associé un angle de détection, ce qui permet d'accroître encore la précision de l'image reconstituée à partir des mesures effectuées. Par souci de clarté on n'a pas représenté sur la figure 7 tous les cônes de détection.

Ce mode de réalisation de l'invention peut être combiné avec des épaisseurs variables des sous couches, comme illustré sur la figure 3, et avec une réalisation en mode tomographique comme illustré sur la figure 6.

On peut donc réaliser diverses géométries, dans lesquelles un trou du collimateur est associé à un pixel détecteur (comme sur la figure 4B), ou un trou du collimateur est associé à deux pixels détecteurs (c'est le cas de la figure 7). On peut de façon générale, associer un nombre entier n quelconque de pixels à chaque trou de collimateur.

Quel que soit le mode de réalisation envisagé, l'information relative à la DOI permet de décomposer un détecteur en multi-couches. Plus précisément, le détecteur est décomposé, en vue de dessus, en pixels, chaque pixel étant discrétisé, ou décomposé, en plusieurs voxels superposés.

Selon un mode de mise en oeuvre de la présente invention, on procède, préalablement à la reconstruction d'une image source, à une observation de cette source pendant une durée prédéfinie. Lors de cette observation, on détermine pour chaque photon reçu par le détecteur quel est le voxel du détecteur dans lequel le photon a interagi. On effectue alors un comptage afin de déterminer à l'issue de cette période d'observation quel est le nombre de photons ayant interagi dans chaque voxel. On associe alors à chaque voxel, une donnée brute, correspondant à un nombre de coups relevés pour ce voxel. On pourra également associer à chaque voxel une donnée différentielle correspondant à une différence entre deux valeurs de données brutes, comme cela est décrit plus en détail ci-après. La reconstruction s'effectue alors à partir de ces données « statistiques », données brutes ou données différentielles.

La reconstruction peut utiliser des blocs de données, définis par exemple comme :

- le groupement des données par sous-couche du détecteur,
- ou le groupement, pour chaque pixel détecteur, des données provenant des voxels de ce pixel et présents dans les différentes couches du détecteur.

La reconstruction sera alors faite :

- voxel après voxel dans un ordre quelconque ou bien déterminé,
- bloc de données après bloc de données, dans un ordre quelconque ou bien déterminé.

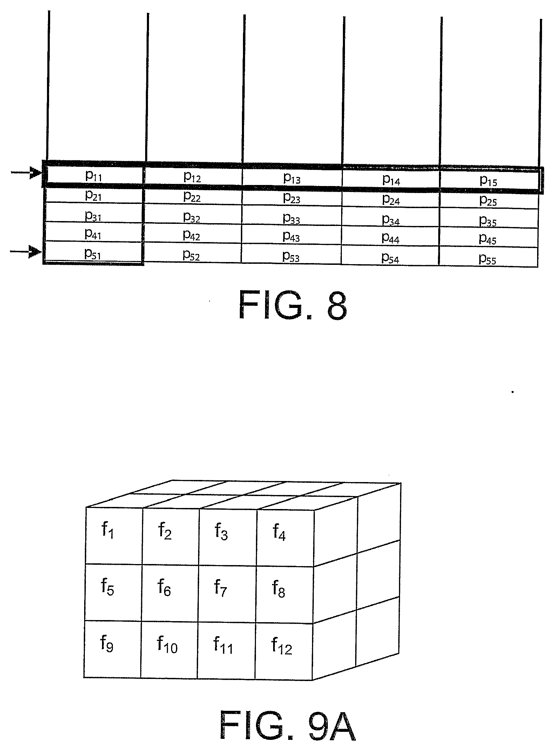

La figure 8 donne un exemple de 2 types de blocs de données réalisables : un bloc de données par couche (exemple : p11, p12, p13, p14, p15), un bloc de données par pixel détecteur (exemple : p11, p21, p31, p41, p51).

Les méthodes décrites par Bruyant P.P. « Analytic and Itérative Reconstruction Algorithms in SPECT » Journal of Nuclear Médecine, vol 043, n°10, pp 1343-1358, 2002, ou encore par Vandenberghe S. « Itérative reconstruction algorithms in nuclear medicine » Computerized Médical Imaging and Graphics 25 105-111, 2001, peuvent être utilisées pour la reconstruction.

Parmi les méthodes de reconstruction pouvant être utilisées, on peut citer tant des méthodes de reconstruction itératives algébriques (ART ou SART par exemple) que des méthodes itératives statistiques (MLEM, OSEM ou MAP par exemple). Ces cinq méthodes sont décrites dans les articles de Bruyant P.P. et Vandenberghe S. cités ci-dessus.

Les méthodes de reconstruction permettent de reconstruire l'objet à partir d'un ou de plusieurs jeux de données statistiques éventuellement acquis à différents angles de vue, notamment en mode tomographique.

Les méthodes itératives reposent sur l'expression discrète et matricielle du problème de reconstruction tomographique :

$$[p] = [R][f]$$

où p est la projection acquise par le détecteur à un angle $\theta$, R est l'opérateur de projection à l'angle $\theta$ et f correspond à l'objet à reconstruire.

Plus précisément l'objet à reconstruire est partitionné en I voxels, chaque voxel émettant une intensité, photonique fi, i étant compris entre 1 et I. La figure 9A représente un exemple de partition de l'objet à reconstruire. Par ailleurs, le détecteur est décomposé en K voxels. Une donnée, brute ou différentielle, pk est associée au k-ième voxel du détecteur, k étant compris entre 1 et K.

La représentation discrète est faite à la fois sur une projection (p) et l'image à reconstruire (f).

L'écriture matricielle [p]=[R][f] équivaut à écrire :

$$\begin{bmatrix} p_1 \\ p_2 \\ \cdots \\ p_k \\ \cdots \\ p_K \end{bmatrix} = \begin{bmatrix} r_{11} & \cdots & r_{1i} & \cdots & r_{1I} \\ \cdots & \cdots & \cdots & \cdots & \cdots \\ \cdots & \cdots & \cdots & \cdots & \cdots \\ \cdots & \cdots & r_{ki} & \cdots & \cdots \\ \cdots & \cdots & \cdots & \cdots & \cdots \\ r_{K1} & \cdots & r_{Ki} & \cdots & r_{KI} \end{bmatrix} \begin{bmatrix} f_1 \\ f_2 \\ \cdots \\ f_i \\ \cdots \\ f_I \end{bmatrix}$$

où k est la coordonnée 3D du k$^{ème}$ voxel détecteur et où i est la coordonnée 3D du i$^{ème}$ voxel objet. Le fait de considérer, conformément à l'invention, des sous-couches dans le détecteur ajoute des termes pk (= donnée statistique associée au k-ième voxel) à la matrice P et des termes rki à la matrice R. Les calculs sont donc plus nombreux que dans le cas où on ne considère qu'une couche de détecteur, mais permettent d'obtenir une précision accrue. $p_k = \sum_{i=1}^{I} r_{ki} f_i$ est la mesure de la somme de l'activité le long de la k$^{ème}$ projection et $r_{ki}$ est l'élément matriciel de l'opérateur de projection R de dimension **K×I,** représentant la probabilité qu'un photon émis par le i$^{ème}$ voxel objet soit détecté par le k$^{ème}$ voxel détecteur.

Les méthodes itératives permettent de s'approcher, par étapes successives, d'une solution [f] en minimisant l'erreur quadratique entre une matrice pacquise répertoriant des données statistiques relevées et une projection estimée de l'objet reconstruit correspondant à Rf. On recherche donc : **min ∥ pacquise - Rf ∥².**

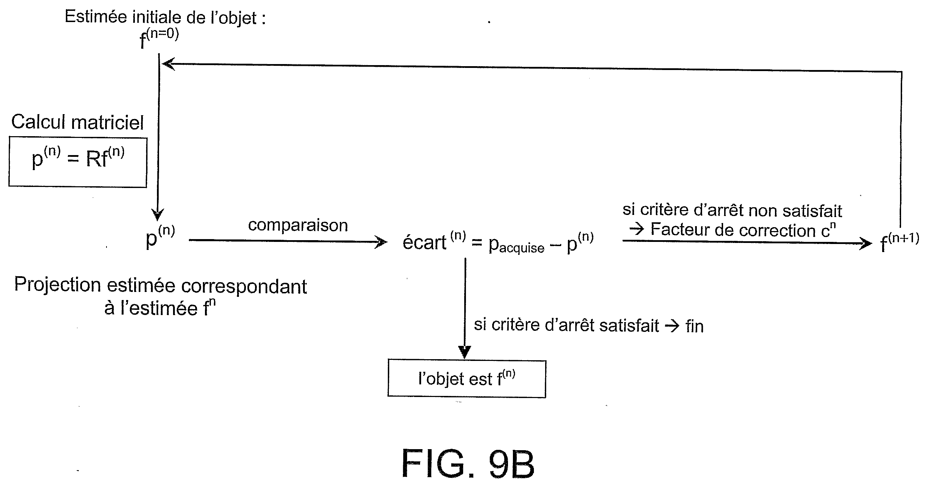

La figure 9B est un schéma d'une méthode itérative.

Dans une étape préalable, on définit, à partir des relevés de signaux électriques effectués aux bornes du détecteur, une matrice pacquise répertoriant pour chaque voxel du détecteur une donnée statistique brute ou différentielle fonction du nombre d'interactions relevées dans ce voxel.

Puis, à partir d'une estimée initiale d'un objet f(n=0), on réalise un calcul matriciel initial :

$$p(n=0) = R \cdot f(n=0),$$

qui donne une projection estimée initiale p (n=0) correspondant à l'estimée f(n=0) de l'objet.

On compare alors la projection estimée initiale p(n=0) à la matrice pacquise en calculant un écart entre ces matrices sous la forme :

$$Ecart(n=0) = pacquise - p(n=0)$$

Plus l'écart est « petit », plus la matrice p(n=0) est proche de pacquise, et par conséquent plus l'estimée initiale f(n=0) est proche de la réalité, et inversement.

On compare alors l'écart E(n=0) à une valeur seuil prédéfinie.

Si l'écart E(n=0) est inférieur à cette valeur seuil, on s'arrête car on a identifié du premier coup une bonne matrice f. Cependant cela est peu probable, et dans la majorité des cas, on définit alors une nouvelle estimée f(n=1). Pour ce faire, on peut appliquer un facteur de correction cn à f(n=0).

On reprend alors les étapes susmentionnées en calculant une nouvelle projection estimée p(n=1) puis un écart E(n=1). Dans le cas où ce nouvel écart est supérieur à la valeur seuil susmentionnée on définit une nouvelle estimée f(n=2) et ainsi de suite.

Afin d'éviter un nombre d'itérations trop important, on peut définir un nombre maximal d'itérations. L'estimée f retenue est alors la dernière obtenue ou éventuellement l'estimée ayant conduit à un écart E minimal.

Le facteur cn utilisé pour définir une nouvelle estimée est fonction de la méthode itérative utilisée. Pour la mise en oeuvre de telles méthodes, on pourra se référer aux articles précédemment cités de Bruyant P.P. et Vanderberghe S. ainsi qu'aux ouvrages intitulés « Mathematical Methods in Image Reconstruction » de Frank Natter et Frank Wübbeling et « La Tomographie sous la direction de Pierre Grangeat ».

Dans le cas des méthodes de type SART, OSEM, les sous-ensembles de données utilisés dans les boucles d'itération correspondent alors à des blocs de données tels que définis ci-dessus.

Dans le cas d'une reconstruction en mode tomographique, on pourra utiliser alternativement des blocs de données acquis à différents angles de vue.

Des exemples concrets de réalisation de l'invention vont être donnés.

Dans un premier exemple on met en oeuvre une méthode de reconstruction utilisant 5 sous-couches d'un détecteur de 5 mm d'épaisseur. La précision de la mesure de la DOI est de 1 mm.

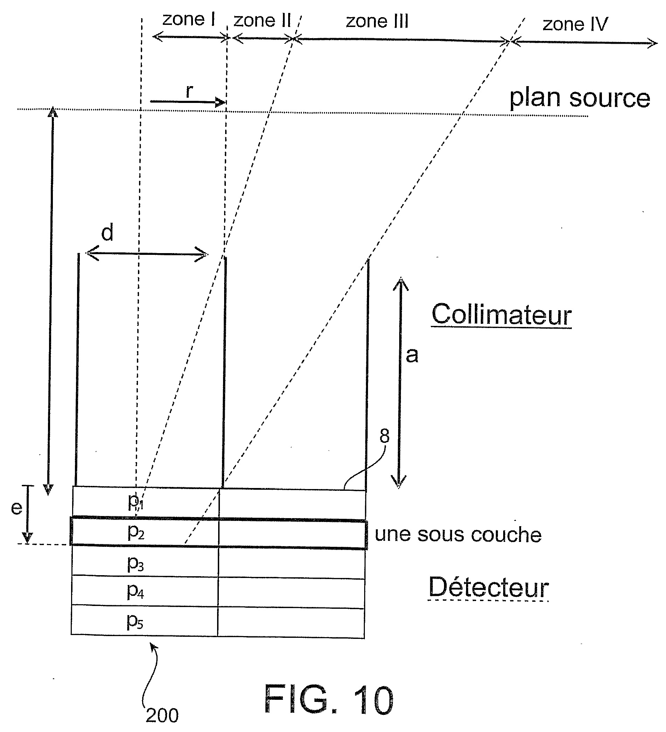

Comme illustré sur la figure 10, on définit, pour chaque voxel d'un pixel donné, quatre zones d'éclairement, r désignant la position d'un point dans cette zone, parallèlement au plan source :

$$\text{zone I} : r \in \left[ 0 \ ; \ \frac{d}{2} \right]$$

$$\text{zone II} : r \in \left[ \frac{d}{2} \ ; \ d\left( \frac{1}{2} + \frac{z-a}{a+e} \right) \right]$$

$$\text{zone III} : r \in \left[ d\left( \frac{1}{2} + \frac{z-a}{a+e} \right) \ ; \ d\left( \frac{1}{2} + \frac{z}{a} \right) \right]$$

$$\text{zone IV} : r > d\left( \frac{1}{2} + \frac{z}{a} \right)$$

où e est la distance entre la face d'entrée 8 du pixel détecteur et la sous-couche considérée. Pour la première sous-couche, correspondant au pixel p1, la distance e est nulle. La distance e vaut respectivement 1, 2, 3 ou 4 mm pour les deuxième, troisième, quatrième et cinquième sous-couches.

Le choix de 4 zones est uniquement à titre de simplification, pour le calcul mathématique qui va être présenté.

Deux évaluations des coefficients de la matrice R sont possibles :

1. par calcul géométrique mathématique ; Les calculs présentés le sont pour une géométrie à une dimension. Ils peuvent être généralisés à deux dimensions.

2. par simulation SINDBAD, logiciel de simulation décrit dans les documents de A. Glière et al. : "Sindbad: From CAD Model to Synthetic Radiographs." Review of Progress in Quantitative Nondestructive Evaluation, ed. by D.O.Thompson and D.E.Chimenti, Vol. 17, pp 387-394, 1998 ; R. Guillemaud et al.: SINDBAD: a multi purpose and scalable X-ray simulation tool for NDE and medical imaging", PSIP 2003, Grenoble France; J. Tabary et al.: New functionalities in the SINDBAD software for realistic X-ray simulation devoted to complex parts inspection, Proc. ECNDT, Berlin Sept. 2006.

La simulation offre l'avantage d'être utilisable en deux dimensions, et de prendre en compte de manière plus réaliste les phénomènes physiques (par exemple la transparence septale du collimateur, et l'atténuation possible par l'objet source).

1. Evaluation (en une dimension) des coefficients de la matrice R par calcul géométrique mathématique approché (en supposant un collimateur avec épaisseur de septa nulle):

Dans les 4 zones d'éclairement:

zone I :

$$R = \frac{\theta_1 + \theta_2}{2\pi} * \exp^{-\mu.e} * (1 - \exp^{-\mu.pas\_e})$$

avec:

$$\theta_1 = \arctan\left(\frac{\frac{d}{2} - r}{z + e}\right) \quad et \quad \theta_2 = \arctan\left(\frac{\frac{d}{2} + r}{z + e}\right)$$

zone II :

$$R = \frac{\theta_2 - \theta_1}{2\pi} * \exp^{-\mu.e} * (1 - \exp^{-\mu.pas\_e})$$

avec:

$$\theta_1 = \arctan\left(\frac{r - \frac{d}{2}}{z - a}\right) \quad et \quad \theta_2 = \arctan\left(\frac{r + \frac{d}{2}}{z + e}\right)$$

zone III :

$$R = \frac{\theta_2 - \theta_1}{2\pi} * \exp^{-\mu.\frac{e}{\cos\left(\frac{\theta_1+\theta_2}{2}\right)}} * (1 - \exp^{-\mu.pas\_e})$$

avec :

$$\theta_1 = \arctan\left(\frac{r - \frac{d}{2}}{z + e}\right) \quad et \quad \theta_2 = \arctan\left(\frac{r - \frac{d}{2}}{z}\right)$$

Zone IV :

$$R = 0$$

où pas_e correspond à l'épaisseur de la sous-couche du voxel considéré. Dans notre exemple, pas_e est égal à 1mm car toutes les couches sont d'épaisseurs égales.

2. Evaluation des coefficients de la matrice R par simulation SINDBAD (en deux dimensions), permettant d'obtenir la matrice R vraie. On prend en compte :

- l'épaisseur des septa, par la transparence septale,
- la transmission et de l'absorption des sous-couches du détecteur,
- l'atténuation possible par l'objet.

Des résultats vont être présentés : on mentionnera l'évaluation (mathématique) de l'apport de la DOI sur un système en une dimension.

On présentera :

- l'évaluation des méthodes itératives :
- algébriques additives (ART ou SART),
- et statistiques multiplicatives (MLEM ou OSEM),
- puis l'évaluation en :
- mode planaire (avec un seul angle de vue),
- et en mode tomographique (avec plusieurs angles de vue).

<u>Premier exemple</u> : évaluation (par calcul mathématique restreint à une dimension) qualitative de l'apport de la DOI en mode planaire (avec un angle de vue : 0°) et en mode tomographique (avec 9 angles de vue : 0°, $\pm$ 90°, $\pm$ 67,5°,$\pm$ 45°,$\pm$ 22,5°).

Dans cet exemple il s'agit de la reconstruction d'une image avec une source ponctuelle centrée dans l'objet.

L'objet a les dimensions suivantes :

Nx = 21 voxels et Nz = 41 voxels,
pasX = pasZ = 0.5 mm (z indique une profondeur),
dist_S_C = 85.25 mm (distance centre de l'objet-collimateur 4 (face d'entrée)).

Le collimateur est un collimateur à trous parallèles carrés de côté 2.0 mm, de septa nul, et de hauteur 20 mm.

Le détecteur est constitué de 35 pixels (1D) de dimension 2.0 mm, et ce détecteur possède une épaisseur de 5 mm (ou est discrétisé en cinq sous-couches détecteur d'épaisseur 1 mm chacune).

On utilise les méthodes de reconstruction ART, SART, MLEM et OSEM.

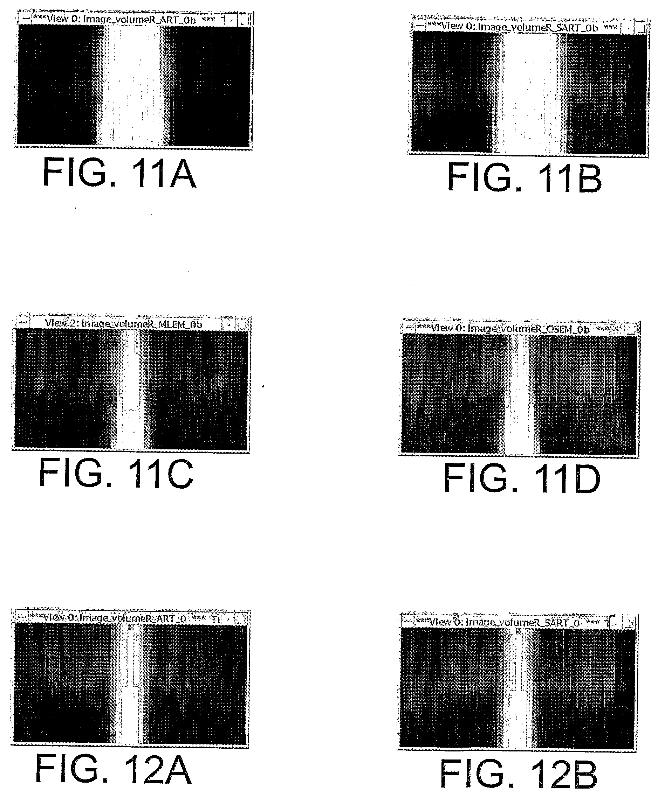

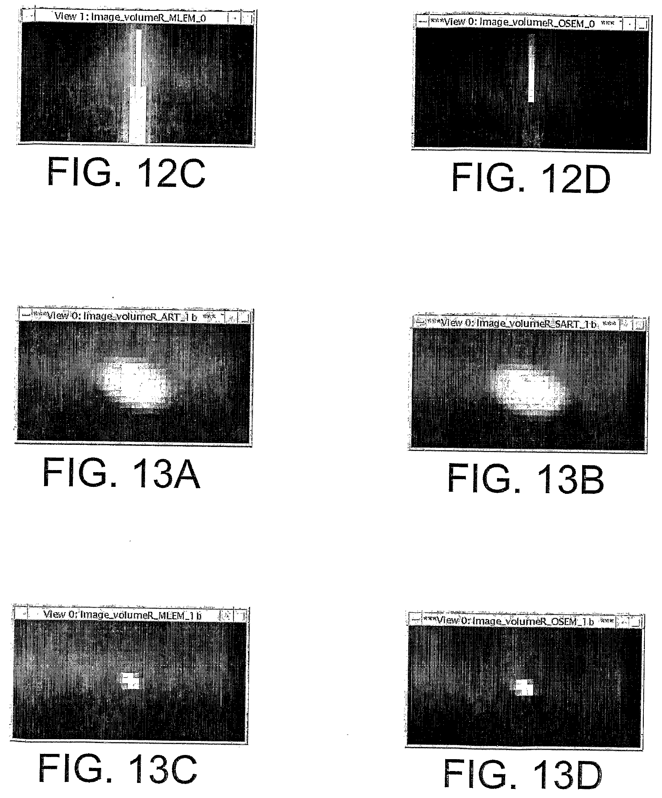

En mode planaire on obtient les images reconstruites des figures 11A-11D (cas d'une couche de 5 mm) et 12A-12D (cas de cinq sous-couches de 1 mm). En mode tomographique on obtient les images reconstruites des figures 13A - 13D (cas d'une couche de 5 mm) et 14A-14D (cas de cinq sous-couches de 1 mm).

Les figures 11A, 12A, 13A, 14A sont le résultat de la méthode ART, les figures 11B, 12B, 13B, 14B celui de la méthode SART, les figures 11C, 12C, 13C, 14C celui de la méthode MLEM, les figures 11D, 12D, 13D, 14D celui de la méthode OSEM.

En mode planaire les figures 11A-12D montrent que les images reconstruites en mode planaire sont de meilleures qualités avec l'information supplémentaire de la DOI

Les méthodes itératives statistiques (MLEM et OSEM) offrent une meilleure reconstruction que les méthodes itératives algébriques, et la méthode OSEM est plus performante que la méthode MLEM.

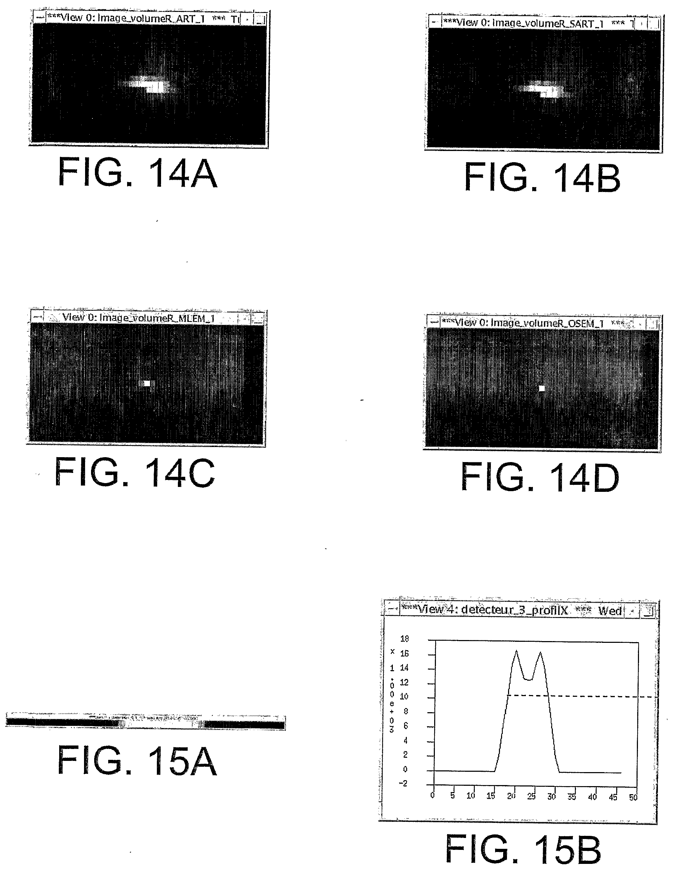

En mode tomographique les figures 13A-13D et 14A-14D montrent que les images reconstruites dans ce mode permettent d'accéder à l'information de profondeur.

Les images reconstruites en mode tomographique sont de meilleure qualité avec l'information supplémentaire de la DOI.

<u>Deuxième exemple</u> : évaluation qualitative de l'apport de la DOI en mode planaire. On reconstruit une image avec une ou deux sources ponctuelles.

L'objet a les dimensions suivantes :

Nx = 21 voxels et Nz = 41 voxels,
pasX = pasZ = 0.5 mm,
dist_S_C = 100 mm (distance objet-collimateur 4).

Le collimateur est un collimateur à trous parallèles carrés de 1.5 mm, de septa nul, et de hauteur 25 mm.

Le détecteur est constitué de 47 pixels de dimension 1.5 mm, et ce détecteur a une épaisseur de 5 mm décomposée éventuellement en 5 sous-couches de 1 mm chacune.

On utilise la méthode de reconstruction OSEM.

Les premiers résultats correspondent au cas de deux sources ponctuelles et permettent d'étudier la différence entre un détecteur à une couche et un détecteur à cinq couches pour la distinction de deux sources ponctuelles.

On obtient les images reconstruites suivantes :

- figures 15A-15E (cas d'une couche de 5 mm) et 16A-16E (cas de 5 sous-couches de 1 mm), pour une distance entre les deux sources de 9.5 mm,

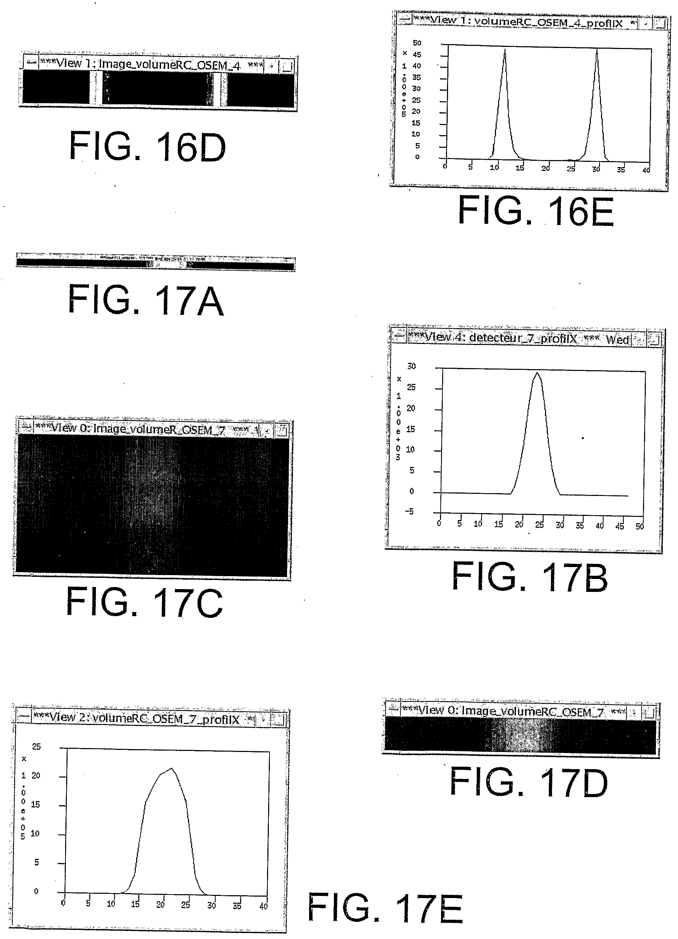

- figures 17A-17E (cas d'une couche de 5 mm) et 18A-18E (cas de 5 sous-couches de 1 mm), pour une distance entre les deux sources de 3.5 mm.

Pour les deux cas (une seule couche de 5mm et cinq couches de 1 mm) :

- les figures 15A, 16A, 17A, 18A représentent le nombre d'interactions dans le cas du détecteur,
- les figures 15B, 16B, 17B, 18B représentent le profil détecteur des deux sources vu par le détecteur,

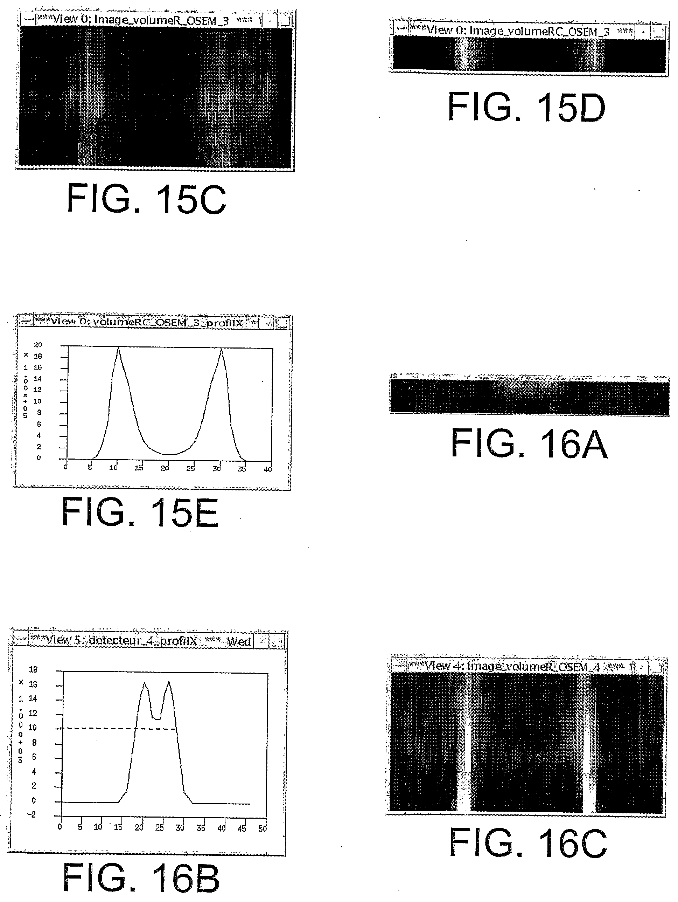

- les figures 15C, 16C, 17C, 18C représentent l'image reconstruite,
- les figures 15D, 16D, 17D, 18D représentent l'image reconstruite cumulée sur la profondeur,
- les figures 15E, 16E, 17E, 18E représentent le profil de l'image reconstruite.

Pour le cas de plusieurs couches de 1 mm chacune, on peut conclure de ces figures que la mesure de la DOI introduite dans la reconstruction permet de dissocier deux sources ponctuelles rapprochées, ce qui est impossible sans cette information supplémentaire. La DOI améliore donc la résolution spatiale pour une même efficacité du système.

Les deuxièmes résultats correspondent au cas d'une source ponctuelle et permettent d'étudier la différence entre un détecteur à une couche et un détecteur à 5 sous-couches en élargissant la taille des trous du collimateur (on passe d'un collimateur de 1,5 mm à un collimateur de 6 mm).

On obtient les images reconstruites suivantes :

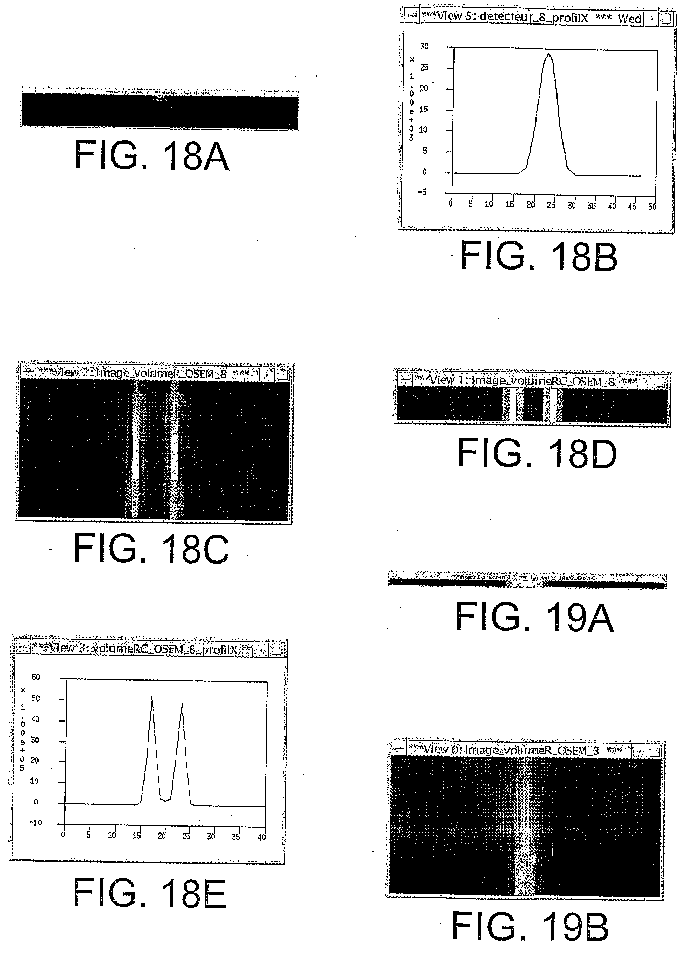

- figures 19A-19D (cas d'une couche de 5 mm) et 20A-20D (cas de 5 sous-couches de 1 mm), pour un collimateur de 1,5 mm,

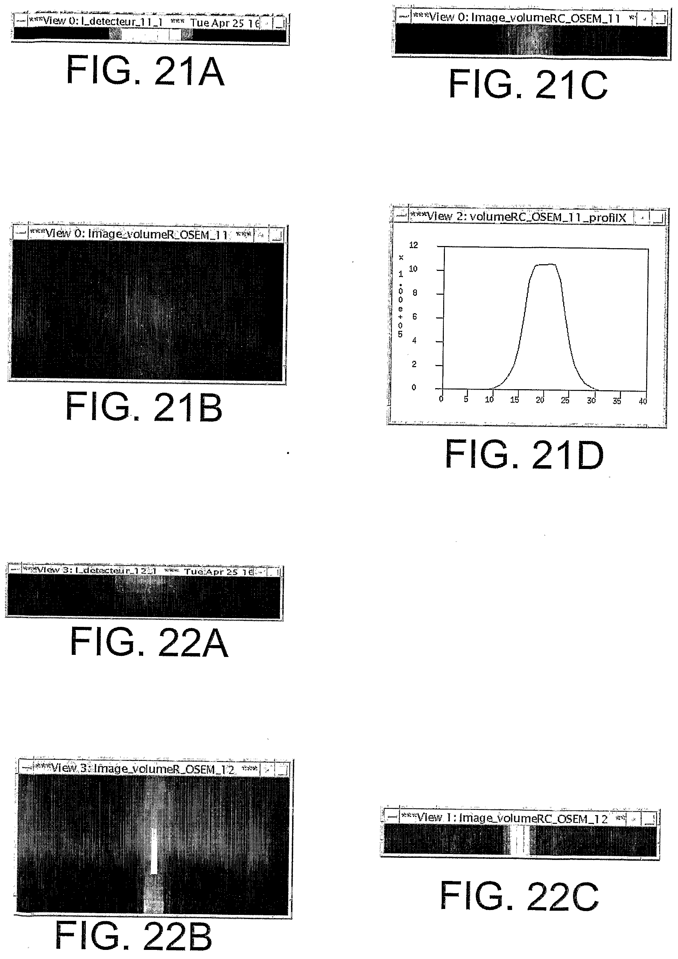

- figures 21A-21D (cas d'une couche de 5 mm) et 22A-22D (cas de 5 sous-couches de 1 mm), pour un collimateur de 3,0 mm,

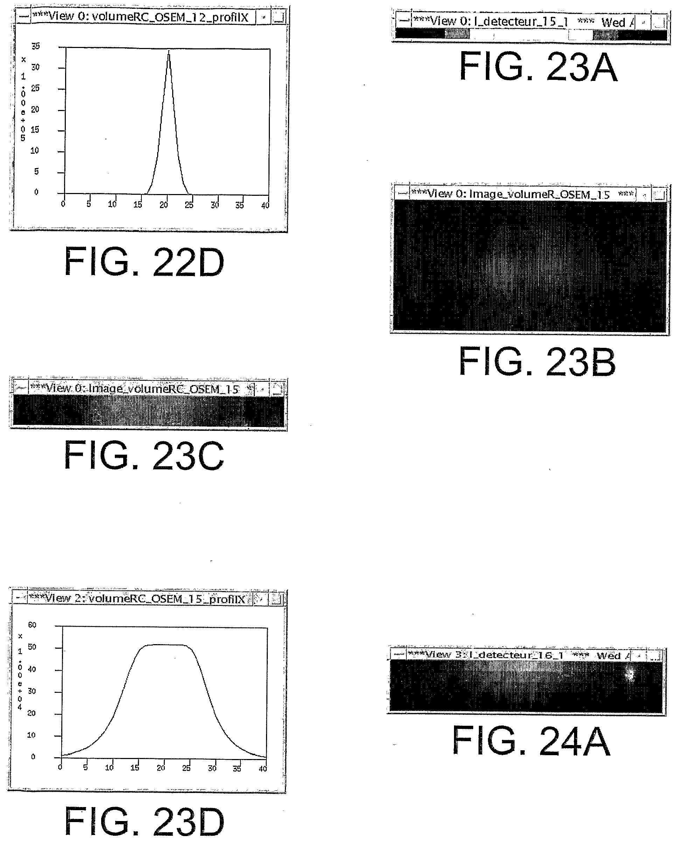

- figures 23A-23D (cas d'une couche de 5 mm) et 24A-24D (cas de 5 sous-couches de 1 mm), pour un collimateur de 6,0 mm.

Pour les trois cas :

- les figures 19A, 20A, 21A, 22A, 23A, 24A représentent le nombre d'interactions dans le détecteur,
- les figures 19B, 20B, 21B, 22B, 23B, 24B représentent l'image reconstruite,

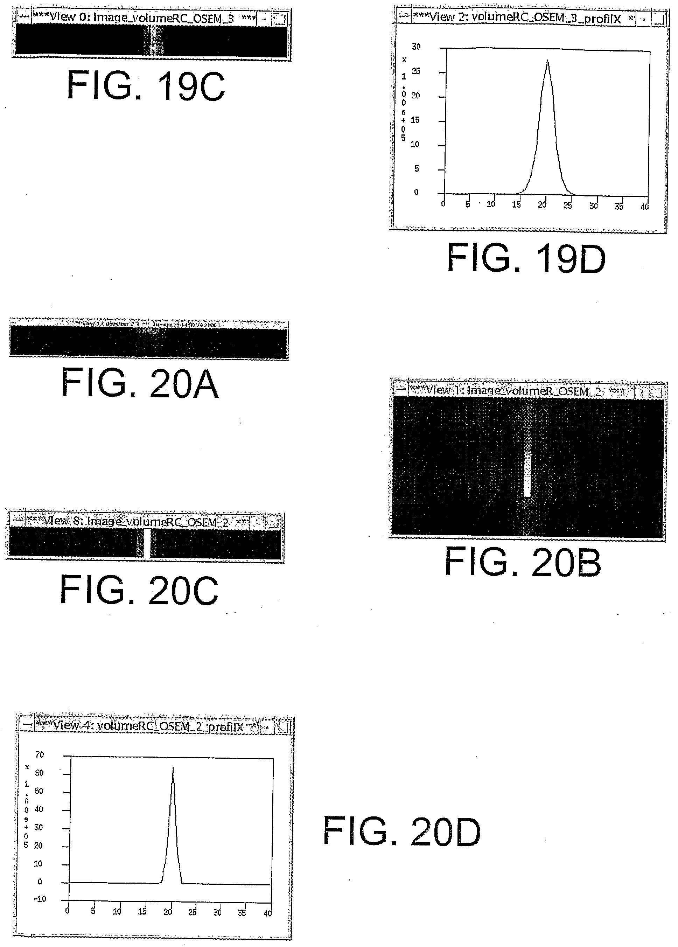

- les figures 19C, 20C, 21C, 22C, 23C, 24C représentent l'image reconstruite cumulée,
- les figures 19D, 20D, 21D, 22D, 23D, 24D représentent les profils de l'image reconstruite de la source ponctuelle.

Ces figures permettent de conclure que la mesure de la DOI introduite dans la reconstruction permet d'améliorer la résolution spatiale de l'objet reconstruit pour une efficacité identique.

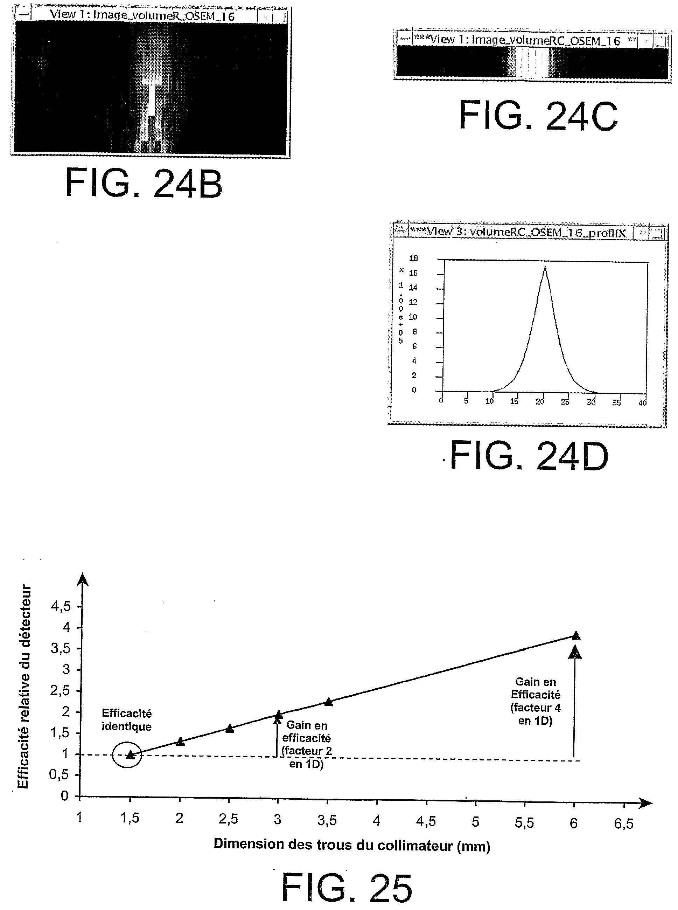

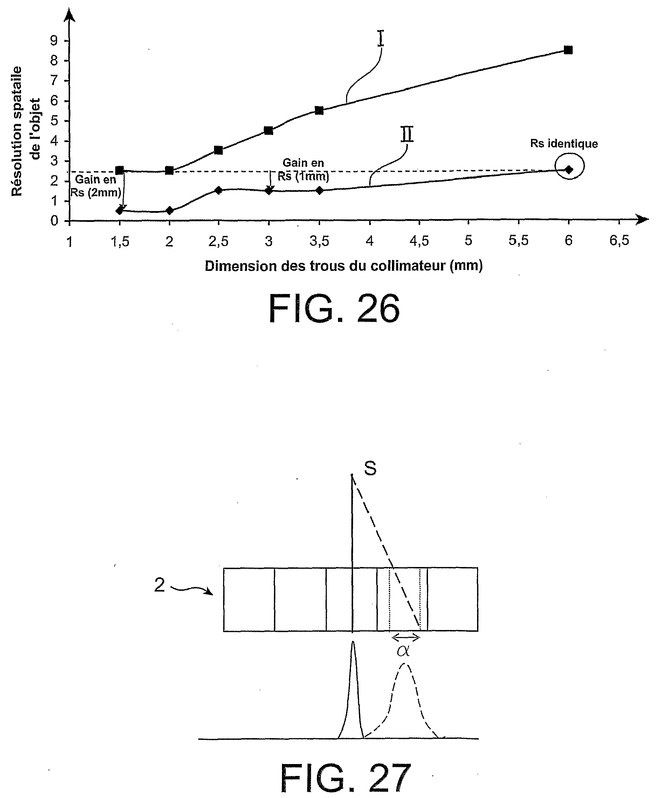

L'évolution de l'efficacité et de la résolution spatiale en fonction de la taille des trous du collimateur est représentée en figures 25 et 26.

Sur la figure 26, la courbe I représente la résolution pour un détecteur « une couche » et la courbe II pour un détecteur « cinq couches ».

La conclusion de ces résultats (figure 25) est que, pour une augmentation de l'efficacité d'un facteur 2 (de $83.83\ 10^{-4}$ à $162.30\ 10^{-4}$: figure 25), il y a une amélioration de la résolution spatiale de l'image reconstruite de 1 mm (passage de 2.5 mm à 1.5 mm). L'augmentation de l'efficacité est portée à 4 pour un calcul en deux dimensions.

Pour une augmentation de l'efficacité d'un facteur 4 (de $83.83\ 10^{-4}$ à $332.43\ 10^{-4}$) il y a une résolution spatiale identique. L'augmentation de l'efficacité est portée à 16 pour un calcul en deux dimensions.

La mesure de la DOI introduite dans la reconstruction permet donc d'augmenter l'efficacité du système en améliorant aussi la résolution spatiale.

A titre de comparaison, la figure 27 illustre qualitativement le problème posé lorsque la profondeur de pénétration des photons n'est pas prise en compte dans la technique de reconstruction. En effet, les photons peuvent interagir avec le détecteur 2 sur toute leur trajectoire, entraînant une perte de résolution spatiale (représentée par la distance $\alpha$ sur la

figure 27).

Avec les caméras d'Anger (détecteur scintillateur NaI(Tl)), la perte en résolution spatiale due à la pénétration avec un angle oblique de certains photons dans le détecteur est noyée dans la pauvre résolution spatiale intrinsèque du scintillateur (qui est de l'ordre de 3 mm à 140 keV).

Avec les détecteurs semi-conducteurs tels que CZT, la résolution spatiale intrinsèque est bien meilleure que pour les détecteurs NaI(Tl) et la perte en résolution spatiale due à la pénétration avec un angle oblique de certains photons dans le détecteur est visible, occasionnant un flou dans l'image.

Ainsi avec les semi-conducteurs, tels que CZT, l'information de profondeur d'interaction du photon dans le détecteur permet de limiter la perte en résolution spatiale.

L'implémentation de la mesure de la DOI dans les méthodes de reconstruction itérative permet:

- d'améliorer la résolution spatiale du système pour une même efficacité,
- ou d'améliorer l'efficacité du système pour une même résolution spatiale,
- ou d'améliorer l'efficacité et la résolution spatiale du système,
- ou d'améliorer le compromis entre l'efficacité et la résolution spatiale du système.

Un dispositif selon l'invention, tel qu'une gamma-caméra, comporte un détecteur ou un ensemble de détecteurs 2, en mode planaire ou tomographique, et des moyens de traitement permettant de mettre en oeuvre un procédé tel que ceux décrits ci-dessus. Ces moyens peuvent être des moyens électroniques tels qu'un microordinateur. Ces moyens électroniques peuvent également être un circuit électronique spécifique assemblé avec le détecteur.

Selon un mode de réalisation d'un dispositif selon la présente invention, des moyens de visualisation peuvent être prévus pour visualiser une image reconstruite telle que celles des figures 11A-11D, 12A-12D, 13A-13D, 15A-15E, 16A-16E, 17A-17E, 18A-18E, 19A-19D, 20A-20D...... etc.

On peut également utiliser des moyens de mémorisation pour mémoriser des spectres biparamétriques tels que décrits précédemment en référence à la demande de brevet de la demanderesse EP-763 751.

Le dispositif comporte alors des moyens pour déterminer le nombre d'interaction dans chaque sous-couche, ou voxel, de chaque pixel du détecteur.

Les moyens de mémorisation peuvent aussi mémoriser diverses segmentations d'un même détecteur, par exemple une segmentation en sous-couches d'épaisseurs identiques, ou en sous-couches d'épaisseurs croissantes (modèle de la figure 3) que le détecteur soit considéré comme ayant un seul pixel détecteur par trou de collimateur (figure 4A) ou plusieurs pixels par trou de collimateur (cas de la figure 7), l'utilisateur pouvant sélectionner, par exemple par un menu déroulant, la segmentation souhaitée.

Quel que soit le mode de réalisation, l'information relative à la DOI permet de décrire un détecteur en multi-couches. Chaque pixel est alors discrétisé en voxels placés sur ces différentes couches. Les données statistiques obtenues pour chaque voxel peuvent être utilisées de diverses manières lors de la reconstruction, que ce soit voxel par voxel ou par regroupement de voxels en blocs.

On peut également traiter les données statistiques brutes pour obtenir des données statistiques différentielles par filtrage différentiel préalablement à la reconstruction. Chaque donnée statistique différentielle correspond par exemple à une différence entre des cônes de réception de deux voxels voisins, donc d'ouvertures angulaires légèrement différentes : par exemple cette différence est illustrée par des hachures sur la figure 1B pour les deux cônes référencés 60 et 62.

Un tel traitement préalable des données, les rendant plus indépendantes au sens des probabilités, permet à l'algorithme de reconstruction de mieux converger.

Au niveau de l'écriture matricielle (formule [p]=[R][f] ci-dessus, cela revient à modifier p ; typiquement on remplace deux éléments de p, par exemple $p_1$ et $p_2$, par $p_1$ et $p_1$-$p_2$, si $p_1$ et $p_2$ concernent deux voxels détecteur de même position spatiale, appartenant à un même pixel, mais dans des couches différentes (à des profondeurs différentes). Il en résulte que la matrice R est plus « creuse » (au sens mathématique, c'est-à-dire contient plus de zéros) ; en effet, chaque nouvel élément de p correspond à un moins grand nombre de voxels objet. Le résultat de l'algorithme de reconstruction est alors potentiellement meilleur.

Selon un mode de mise en oeuvre de la présente invention, on prend en compte uniquement les interactions de type photoélectrique et non les interactions par effet Compton. Un moyen de s'affranchir des interactions Compton est décrit dans la demande de brevet français de la demanderesse numéro FR 2790560.

## Revendications

**1.** Procédé de reconstruction d'une image d'une source (S) de photons, à partir d'interactions de photons émis par cette source avec un détecteur (2) d'une gamma-caméra, en matériau semi-conducteur, positionné derrière un collimateur (4), comportant :

- décomposer le détecteur en plusieurs pixels, et chaque pixel en plusieurs voxels superposés,
- associer, à chaque interaction de photon avec le détecteur en matériau semi-conducteur, une information relative à la profondeur, dans le détecteur, de cette interaction, en déterminant, pour chaque photon reçu, le voxel du détecteur dans lequel le photon a interagi,
- comptabiliser, pour chaque voxel du détecteur, le nombre de photons ayant interagi dans ce voxel,
- définir, pour chaque voxel du détecteur, une donnée statistique brute ou différentielle, une donnée brute correspondant au nombre de photons comptabilisés pour le voxel considéré, une donnée différentielle correspondant à une différence entre des nombres de photons comptabilisés, et
- reconstruire une image de la source (S) de photons à partir desdites informations de profondeur, en utilisant, voxel par voxel, les données statistiques obtenues pour chaque voxel.

**2.** Procédé selon la revendication 1, le détecteur étant monolithique.

**3.** Procédé selon la revendication 1 ou 2, dans lequel l'étape de reconstruction met en oeuvre un procédé de reconstruction itératif partant d'une modélisation reliant le détecteur et l'image de la source à reconstruire définie par $[p]=[R][f]$ où

[f] est une matrice comprenant I termes f1 à fI, le i-ième terme fi correspondant à un nombre de photons émis par un i-ième voxel de la source,
[p] est une matrice comprenant K termes p1 à pK, K étant égal au nombre de voxels du détecteur, le k-ième terme pk correspondant à la donnée statistique déterminée pour le k-ième voxel du détecteur, et
[R] est une matrice correspondant à un opérateur de projection de [f] sur [p].

**4.** Procédé selon la revendication 3, la reconstruction étant réalisée selon une méthode itérative algébrique ou la méthode de reconstruction étant une méthode itérative statistique.

**5.** Procédé selon l'une des revendications 1 à 4, dans lequel le détecteur est décomposé en n couches d'interaction d'épaisseurs identiques ou ayant des épaisseurs croissantes depuis la face d'entrée du détecteur, les voxels d'un même pixel appartenant à des couches différentes.

**6.** Procédé selon l'une des revendications 1 à 5, le volume de chaque portion du détecteur située dans le prolongement de chaque trou du collimateur, comprenant au moins deux pixels.

**7.** Procédé selon l'une des revendications précédentes, l'information relative à la profondeur dans le détecteur étant obtenue par détermination du temps de montée et/ou de l'amplitude d'un signal mesuré aux bornes du détecteur.

**8.** Dispositif de reconstruction d'image d'une source (S) de photons à partir d'interactions de photons, émis par cette source, avec un détecteur (2) d'une gamma-caméra, en matériau semi-conducteur, positionné derrière un collimateur, le détecteur étant décomposé en plusieurs pixels, chaque pixel comprenant plusieurs voxels superposés, ce dispositif comportant :

- des moyens (24) pour associer à chaque interaction de photon, émis par une source de photons, avec le détecteur, une information relative à la profondeur, dans le détecteur, de cette interaction, lesdits moyens étant prévus pour déterminer, pour chaque photon reçu, le voxel du détecteur dans lequel le photon a interagi,
- des moyens (24) de reconstruction, pour reconstruire une image de la source (S) de photons à partir desdites informations de profondeur, ces moyens de reconstruction étant prévus pour comptabiliser, pour chaque voxel du détecteur, le nombre de photons ayant interagi dans ce voxel et pour définir, pour chaque voxel du détecteur, une donnée statistique brute ou différentielle, une donnée brute correspondant au nombre de photons comptabilisés pour le voxel considéré, une donnée différentielle correspondant à une différence entre des nombres de photons comptabilisés.

**9.** Dispositif d'imagerie comportant un détecteur (2) de rayonnement, un collimateur (4) disposé devant le détecteur, et un dispositif de reconstruction d'images selon la revendication 8.

**10.** Dispositif d'imagerie comportant un détecteur (2) de rayonnement, un collimateur (4) disposé devant le détecteur, et un dispositif de reconstruction d'images selon la revendication 8 , dans lequel le détecteur est monolithique, les voxels de chaque pixel étant définis par une décomposition virtuelle du détecteur, chaque pixel étant relié à un unique jeu d'anode/cathode permettant de relever les signaux électriques produits par une interaction photonique dans un des voxels du pixel considéré.

**11.** Dispositif d'imagerie comportant un détecteur (2) de rayonnement, un collimateur (4) disposé devant le détecteur, et un dispositif de reconstruction d'images selon la revendication 8 dans lequel chaque voxel du détecteur est relié à un jeu d'anode/cathode permettant de relever les signaux électriques produits par une interaction photonique dans le voxel considéré.

**12.** Dispositif selon l'une des revendications 8 à 11, le détecteur étant en un matériau de type CdZnTe ou CdTe.

**13.** Utilisation en mode planaire ou tomographique d'un dispositif selon l'une des revendications 8 à 12.

**Patentansprüche**

**1.** Verfahren zur Rekonstruktion eines Bildes einer Photonenquelle (S) aus den Wechselwirkungen der von der Photonenquelle abgegebenen Photonen mit einem Detektor (2) einer Gamma-Kamera aus Halbleitermaterial, welcher hinter einem Kollimator (4) positioniert ist, wobei das Verfahren die folgenden Schritte umfasst:

- Zerlegen des Detektors in mehrere Pixel, und jedes Pixel in mehrere überlagerte Voxel;
- Assoziieren bei jeder Photon-Wechselwirkung mit dem Detektor aus Halbleitermaterial einer Information über die Tiefe dieser Wechselwirkung in dem Detektor, indem für jedes empfangene Photon der Voxel des Detektors, in welchem das Photon interagiert hat, bestimmt wird;
- Erfassen für jeden Voxel des Detektors der Anzahl von Photonen, welche in diesem Voxel interagiert haben;
- Definieren für jeden Voxel eines statistischen Rohdatenwerts oder Differentialwerts, wobei ein Rohdatenwert der Anzahl der Photonen entspricht, die für den betrachteten Voxel erfasst werden, wobei ein Differentialwert einer Differenz zwischen den Anzahlen der erfassten Photonen entspricht, und
- Rekonstruieren eines Bildes der Photonenquelle (S) aus diesen Informationen über die Tiefe, indem die für jeden Voxel erhaltenen statistischen Daten Voxel für Voxel verwendet werden.

**2.** Verfahren nach Anspruch 1, wobei der Detektor monolithisch ist.

**3.** Verfahren nach Anspruch 1 oder 2, in welchem der Schritt der Rekonstruktion ein Verfahren der iterativen Rekonstruktion einsetzt, welches von einer Modellierung, die den Detektor und das Bild der Quelle zur Rekonstruktion verbindet, ausgeht, definiert durch die Gleichung [p] = [R] [f], wobei

[f] eine Matrix ist, welche I Elemente f1 bis fl umfasst, wobei das i-te Element fi einer Anzahl von Photonen entspricht, welche von einem i-ten Voxel der Quelle abgegeben wird;
[p] eine Matrix ist, welche K Elemente p1 bis pK umfasst, wobei K gleich der Anzahl der Voxel des Detektors ist, wobei das k-te Element pk dem statistischen Datenwert entspricht, welcher für den k-ten Voxel des Detektors festgelegt wird; und
[R] eine Matrix ist, welche einem Projektionsoperator von [f] auf [p] entspricht.

**4.** Verfahren nach Anspruch 3, wobei die Rekonstruktion gemäß einem iterativen algebraischen Verfahren realisiert wird oder das Verfahren der Rekonstruktion ein iteratives statistisches Verfahren ist.

**5.** Verfahren nach einem der Ansprüche 1 bis 4, in welchem der Detektor in n Wechselwirkungsschichten von identischer Dicke zerlegt wird, oder zunehmende Dicken von der Eintrittsfläche des Detektors aus aufweist, wobei die Voxel eines selben Pixels verschiedenen Schichten angehören.

**6.** Verfahren nach einem der Ansprüche 1 bis 5, wobei das Volumen eines jeden Detektorabschnitts, welcher in der Verlängerung eines jeden Lochs des Kollimators liegt, mindestens zwei Pixel umfasst.

**7.** Verfahren nach einem der vorhergehenden Ansprüche, wobei die Informationen über die Tiefe in dem Detektor durch Bestimmung der Anstiegszeit und/oder der Amplitude eines Signals, welches am Detektor gemessen wird, erhalten werden.

EP 2 082 263 B1

8. Vorrichtung zur Rekonstruktion eines Bildes einer Photonenquelle (S) aus den Wechselwirkungen von Photonen, welche von dieser Photonenquelle abgegeben werden, mit einem Detektor (2) einer Gamma-Kamera aus Halbleitermaterial, welcher hinter einem Kollimator angeordnet ist, wobei der Detektor in mehrere Pixel zerlegt wird, wobei jedes Pixel mehrere überlagerte Voxel aufweist, wobei die Vorrichtung Folgendes umfasst:

- Einrichtungen (24) zum Assoziieren bei jeder Wechselwirkung des Photons, welches von einer Photonenquelle abgegeben wird, mit dem Detektor eine Information über die Tiefe dieser Wechselwirkung in dem Detektor, wobei diese Einrichtungen vorgesehen sind, um für jedes empfangene Photon den Voxel des Detektors, in welchem jedes Photon interagiert hat, zu bestimmen;
- Einrichtungen (24) zur Rekonstruktion, um ein Bild der Photonenquelle (S) aus diesen Informationen über die Tiefe zu rekonstruieren, wobei diese Einrichtungen zur Rekonstruktion dazu vorgesehen sind, um für jeden Voxel des Detektors die Anzahl von Photonen zu erfassen, welche in diesem Voxel interagiert haben, und um für jeden Voxel des Detektors einen statistischen Rohdatenwert oder Differentialwert festzulegen, wobei ein Rohdatenwert der Anzahl der für den betrachteten Voxel erfassten Photonen entspricht, wobei ein Differentialwert einer Differenz zwischen den Anzahlen der erfassten Photonen entspricht.

9. Bilderzeugungsvorrichtung, welche einen Strahlungsdetektor (2), einen Kollimator (4), welcher vor dem Detektor angeordnet ist, sowie eine Vorrichtung zur Rekonstruktion von Bildern nach Anspruch 8 umfasst.

10. Bilderzeugungsvorrichtung, welche einen Strahlungsdetektor (2), einen Kollimator (4), welcher vor dem Detektor angeordnet ist, sowie eine Vorrichtung zur Rekonstruktion von Bildern nach Anspruch 8 umfasst, in welcher der Detektor monolithisch ist, die Voxel eines jeden Pixels durch eine virtuelle Zerlegung des Detektors definiert werden, jedes Pixel mit einem einzelnen Anoden-/Kathodensatz verbunden ist, welcher die Abnahme der elektrischen Signale, welche von einer Photonen-Wechselwirkung in dem betrachteten Voxel erzeugt werden, ermöglicht.

11. Bilderzeugungsvorrichtung, welche einen Stahlungsdetektor (2), einen Kollimator (4), welcher vor dem Detektor angeordnet ist, sowie eine Vorrichtung zur Rekonstruktion von Bildern nach Anspruch 8 umfasst, in welcher jeder Voxel des Detektors mit einem Anoden-/Kathodensatz verbunden ist, welcher die Abnahme der elektrischen Signale, welche durch eine Photonen-Wechselwirkung in einem der betrachteten Voxel des Pixels erzeugt werden, ermöglicht,

12. Vorrichtung nach einem der Ansprüche 8 bis 11, wobei der Detektor aus einem Material von der Art CdZnTE oder CdTe ist.

13. Verwendung einer Vorrichtung nach einem der Ansprüche 8 bis 12 im Planarmodus oder tomographischen Modus.

**Claims**

1. A method for reconstructing an image from a source (S) of photons, from interactions of photons emitted by this source, with a semi-conductor detector (2) of a gamma-camera, positioned behind a collimator (4), including:

- breaking down the detector into several pixels, and each pixel into several superposed voxels,
- associating with each photon interaction with the detector, a piece of information relating to the depth in the detector, of this interaction, determining for each received photon, the voxel of the detector in which the photon has interacted,
- counting for each voxel of the detector the number of photons having interacted in this voxel,
- defining for each voxel of the detector, a raw or differential statistical datum, a raw datum corresponding to the number of photons counted for the relevant voxel, a differential datum corresponding to a difference between numbers of counted photons
- reconstructing an image of the source (S) of photons from said depth information, using, voxel by voxel the statistical data obtained for each voxel.

2. The method according to claim 1, wherein the detector is monolithic. comprising a preliminary step consisting of breaking down the detector into several pixels, and each pixel into several superposed voxels, and further comprising, prior to the reconstruction step, the following steps:

3. The method according to claim 1 or 2, wherein the reconstruction step implements an iterative reconstruction method

15

starting from a modeling connecting the detector and the image of the source to be reconstructed, defined by [p]=[R][f] wherein

[f] is a matrix comprising I terms f1 to fI, the $i^{th}$ term fi corresponding to a number of photons emitted by an $i^{th}$ voxel of the source,

[p] is a matrix comprising K terms p1 to pK, K being equal to the number of voxels of the detector, the $k^{th}$ term pk corresponding to the statistical datum determined for the $k^{th}$ voxel of the detector, and

[R] is a matrix corresponding to a projection operator of [f] on [p].

4. The method according to claim 3, the reconstruction being carried out according to an algebraic iterative method or the reconstruction method being a statistical iterative method.

5. The method according to any of claims 1 to 4, wherein the detector is broken down into n interaction layers of identical thicknesses or having increasing thicknesses from the entry face of the detector, the voxels of a same pixel belonging to different layers.

6. The method according to any of claims 1 to 5, the volume of each portion of the detector located in the extension of each hole of the collimator, comprising at least two pixels.

7. The method according to any of the preceding claims, the information relating to the depth in the detector being obtained by determining the rise time and/or the amplitude of a signal measured at the terminals of the detector.

8. A device for reconstructing an image of a source (S) of photons from interactions of photons, emitted by this source, with a semi-conductor detector (2) of a gamma-camera positioned behind a collimator, the detector being broken down into several pixels, each pixel comprising several superposed voxels, this device including:

- means (24) for associating with each interaction of photon, emitted by a source of photons, with the detector, a piece of information relating to the depth in the detector of this interaction, said association means being provided in order to determine, for each received photon, the voxel of the detector in which the photon has interacted,

- reconstruction means (24) for reconstructing an image of the source (S) of photons from said depth information, said reconstruction means (24) being provided in order to count, for each voxel of the detector, the number of photons having interacted in this voxel, and for defining for each voxel of the detector, a raw or differential statistical datum, a raw datum corresponding to the number of photons counted for the relevant voxel, a differential datum corresponding to a difference between numbers of counted photons.

9. An imaging device including a radiation detector (2), a collimator (4) positioned in front of the detector, and a device for reconstructing images according to claim 8.

10. An imaging device including a radiation detector (2), a collimator (4) positioned in front of the detector, and a device for reconstructing images according to claim 8, wherein the detector is monolithic, the voxels of each pixel being defined by virtually breaking down the detector, each pixel being connected to a single anode/cathode set, with which the electric signals produced by a photon interaction in one of the voxels of the relevant pixel can be measured.

11. An imaging device including a radiation detector (2), a collimator (4) positioned in front of the detector, and a device for reconstructing images according to claim 8, wherein each voxel of the detector is connected to an anode/cathode set, with which the electric signals produced by a photon interaction in the relevant voxel can be measured.

12. The device according to any of claims 8 to 11, the detector consisting of a semiconducting material, for example of the CdZnTe or CdTe type.

13. The use in a planar or tomographic mode of a device according to any of claims 8 to 12.

FIG. 1A

FIG. 1B

FIG. 2A

FIG. 2B

FIG. 3

FIG. 4A

FIG. 4B

FIG. 5A

FIG. 5B

FIG. 6

FIG. 7

| $p_{11}$ | $p_{12}$ | $p_{13}$ | $p_{14}$ | $p_{15}$ |
|---|---|---|---|---|
| $p_{21}$ | $p_{22}$ | $p_{23}$ | $p_{24}$ | $p_{25}$ |
| $p_{31}$ | $p_{32}$ | $p_{33}$ | $p_{34}$ | $p_{35}$ |
| $p_{41}$ | $p_{42}$ | $p_{43}$ | $p_{44}$ | $p_{45}$ |
| $p_{51}$ | $p_{52}$ | $p_{53}$ | $p_{54}$ | $p_{55}$ |

# FIG. 8

| $f_1$ | $f_2$ | $f_3$ | $f_4$ |
|---|---|---|---|
| $f_5$ | $f_6$ | $f_7$ | $f_8$ |
| $f_9$ | $f_{10}$ | $f_{11}$ | $f_{12}$ |

# FIG. 9A

Estimée initiale de l'objet :
$f^{(n=0)}$

Calcul matriciel
$$p^{(n)} = Rf^{(n)}$$

$p^{(n)}$

Projection estimée correspondant à l'estimée $f^n$

comparaison

$écart^{(n)} = p_{acquise} - p^{(n)}$

si critère d'arrêt non satisfait
→ Facteur de correction $c^n$
$f^{(n+1)}$

si critère d'arrêt satisfait → fin

l'objet est $f^{(n)}$

FIG. 9B

FIG. 10

**FIG. 11A**

**FIG. 11B**

**FIG. 11C**

**FIG. 11D**

**FIG. 12A**

**FIG. 12B**

FIG. 12C

FIG. 12D

FIG. 13A

FIG. 13B

FIG. 13C

FIG. 13D

FIG. 14A

FIG. 14B

FIG. 14C

FIG. 14D

FIG. 15A

FIG. 15B

31

FIG. 15C

FIG. 15D

FIG. 15E

FIG. 16A

FIG. 16B

FIG. 16C

FIG. 16D

FIG. 16E

FIG. 17A

FIG. 17C

FIG. 17B

FIG. 17D

FIG. 17E

FIG. 18A

FIG. 18B

FIG. 18C

FIG. 18D

FIG. 18E

FIG. 19A

FIG. 19B

FIG. 19C

FIG. 19D

FIG. 20A

FIG. 20B

FIG. 20C

FIG. 20D

FIG. 21A

FIG. 21C

FIG. 21B

FIG. 21D

FIG. 22A

FIG. 22B

FIG. 22C

FIG. 22D

FIG. 23A

FIG. 23B

FIG. 23C

FIG. 23D

FIG. 24A

FIG. 24B

FIG. 24C

FIG. 24D

FIG. 25

FIG. 26

FIG. 27

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6448559 B
- EP 763751 A
- FR 2790560

### Littérature non-brevet citée dans la description

- **E. GROS D'AILLON et al.** *IEEE Trans. On Nucl. Science,* 2005, vol. 52 (6), 3096-3102
- **BRUYANT P.P.** Analytic and Itérative Reconstruction Algorithms in SPECT. *Journal of Nuclear Médecine,* 2002, vol. 043, 1343-1358
- **VANDENBERGHE S.** Itérative reconstruction algorithms in nuclear medicine. *Computerized Médical Imaging and Graphics,* 2001, vol. 25, 105-111
- **BRUYANT P.P. ; VANDERBERGHE S.** *Mathematical Methods in Image Reconstruction*
- **FRANK NATTER ; FRANK WÜBBELING.** *La Tomographie sous la direction de Pierre Grangeat*
- Sindbad: From CAD Model to Synthetic Radiographs. **A. GLIÈRE et al.** Review of Progress in Quantitative Nondestructive Evaluation. 1998, vol. 17, 387-394
- **R. GUILLEMAUD et al.** SINDBAD: a multi purpose and scalable X-ray simulation tool for NDE and medical imaging'',. *PSIP,* 2003
- **J. TABARY et al.** New functionalities in the SINDBAD software for realistic X-ray simulation devoted to complex parts inspection. *Proc. ECNDT, Berlin,* Septembre 2006